# EUROPÄISCHE PATENTSCHRIFT

(11) **EP 4 034 588 B1**
(45) Veröffentlichungstag und Bekanntmachung des Hinweises auf die Patenterteilung: **01.04.2026**
(21) Anmeldenummer: 20764413.9
(22) Anmeldetag: 04.09.2020
(51) Int. Cl.: C08G 77/14, C08G 77/20, C09D 183/04

(54) **SILIKON(METH)ACRYLATE, VERFAHREN ZU IHRER HERSTELLUNG UND IHRE VERWENDUNG IN HÄRTBAREN ZUSAMMENSETZUNGEN**
SILICONE (METH)ACRYLATES, METHOD FOR THEIR PREPARATION AND THEIR USE IN CURABLE COMPOSITIONS
(MÉTHA)ACRYLATES DE SILICONE, LEUR PROCÉDÉ DE FABRICATION ET LEUR UTILISATION DANS DES COMPOSITIONS DURCISSABLES

(30) Priorität: 27.09.2019 EP 19200055
(43) Veröffentlichungstag der Anmeldung: 03.08.2022
(73) Patentinhaber: Evonik Operations GmbH, 45128 Essen (DE)
(72) Erfinder: HENNING, Frauke, 45259 Essen (DE); KNOTT, Wilfried, 45355 Essen (DE); AMAJJAHE, Sadik, 40591 Düsseldorf (DE); DÖHLER, Hardi, 45239 Essen (DE); LOHSE, Andrea, 46236 Bottrop (DE); DUDZIK, Horst, 45326 Essen (DE)
(74) Vertreter: Evonik Patent Association
(86) Internationale Anmeldenummer: PCT/EP2020/074752
(87) Internationale Veröffentlichungsnummer: WO 2021/058263

(56) Entgegenhaltungen:
- EP-A1- 1 544 232
- US-A- 4 824 922

## Beschreibung

Die Erfindung betrifft ein Verfahren zur Herstellung von Silikon(meth)acrylaten, bei dem mindestens ein Acetoxysilikon mit mindestens einem hydroxyfunktionellen (Meth)acrylsäureester umgesetzt wird, gemäß dem Verfahren hergestellte Silikon(meth)acrylate sowie ihre Verwendung in härtbaren Zusammensetzungen.

Unter Silikon(meth)acrylaten werden in Rahmen dieser Erfindung Organosiloxane verstanden, die Methacrylsäureestergruppen und/oder Acrylsäureestergruppen, im Folgenden auch als (Meth)acrylsäureestergruppen bezeichnet, tragen. Organosiloxane werden im Folgenden auch einfach als Siloxane bezeichnet.

Unter einem Organosiloxan wird eine Verbindung verstanden, die an Siliziumatome gebundene organische Reste sowie Struktureinheiten der Formel ≡Si-O-Si≡ aufweist, wobei "≡" für die drei verbleibenden Valenzen des betrachteten Siliziumatoms steht. Vorzugsweise handelt es sich bei den Organosiloxanen um Verbindungen, die aus Einheiten ausgewählt aus der Gruppe bestehend aus M = [R₃SiO_{1/2}], D = [R₂SiO_{2/2}], T = [RSiO_{3/2}] zusammengesetzt sind und optional zusätzlich Einheiten der Formel Q = [SiO_{4/2}] aufweisen, wobei R für einen einbindigen organischen Rest steht. Die Reste R können dabei jeweils unabhängig voneinander gewählt werden und sind im paarweisen Vergleich gleich oder unterschiedlich. Die Reste R können teilweise auch durch nicht organische einbindige Reste ersetzt sein, wie beispielsweise Hydroxygruppen oder Chlor. Als Referenz zu der in dieser Schrift verwendeten M-, D-, T-, Q-Nomenklatur zur Beschreibung der Baueinheiten von Organosiloxanen sei W. Noll, Chemie und Technologie der Silicone, Verlag Chemie GmbH, Weinheim (1960), Seite 2 ff. angeführt.

Trennbeschichtungen (häufig auch als abhäsive Beschichtungen oder Release Coatings bezeichnet) sind aus dem Stand der Technik bekannt. Sie finden vielfältigen Einsatz zur Herstellung von Etiketten, Klebebändern oder Hygieneartikeln. Die Trennbeschichtung zeichnet sich durch eine niedrige Adhäsion in Kontakt mit Klebstoffen aus und besteht aus einem strahlengehärteten Silikon. Zur Härtung funktioneller Silikone bedient man sich üblicherweise zweier Mechanismen. Bei der kationischen Härtung wird ein epoxyfunktionelles Organosiloxan mit Hilfe eines Photoinitiators, der bei Bestrahlung eine Säure freisetzt, polymerisiert. Bei der freien, radikalischen Härtung wird ein Silikon(meth)acrylat mit Hilfe eines Photoinitiators, der bei Bestrahlung Radikale bildet, polymerisiert.

Der überwiegende Teil der im Markt erhältlichen Silikon(meth)acrylate leitet sich vom sogenannten SiC-Typ ab, der sich dadurch auszeichnet, dass die die (Meth)acrylatgruppe(n) tragenden Reste über eine Silicium-Kohlenstoffbindung gebunden vorliegen. Zur Herstellung dieser Silikon(meth)acrylate geht man von Wasserstoffsiloxanen aus, die mit hydroxy- oder epoxyfunktionellen Olefinen als Reaktionspartnern in einer Edelmetall - zumeist Platinkatalysierten - Hydrosilylierungsreaktion unter Bildung einer SiC-Bindung verknüpft werden. Im Anschluss werden die so gewonnenen, hydroxy- oder epoxyfunktionellen Silikone (meth)acryliert. Dies wird beispielsweise in der WO 2017/080747 A1 beschrieben. Auch wenn diese Verfahren zuverlässig gute Produktqualitäten garantieren, so haben sie einen gravierenden Kostennachteil durch ihre Mehrstufigkeit, durch die Verwendung hochpreisigen Wasserstoffsiloxans und der Edelmetall-Katalysatoren. Erschwerend kommt hinzu, dass die vollständige Entfernung der Katalysatorrestgehalte aus den Produktmatrices in der Praxis nicht gelingt, so dass auf diesem Wege keine reinen, (edel)metallfreien Silikon(meth)acrylate erhalten werden können. Des Weiteren müssen zur erfolgreichen Reaktionsdurchführung die organischen, das heißt, die Sifreien Reaktanden stets im stöchiometrischen Überschuss eingesetzt werden, was deren spätere, aufwendige destillative Abtrennung notwendig macht. Aufgrund der ausgeprägten Polymerisationsneigung der Silikon(meth)acrylate sind derartige Destillationen im Produktionsmaßstab verfahrenstechnisch anspruchsvoll, langwierig und kostspielig.

Angesichts dieser Schwierigkeiten bei der Herstellung von Silikon(meth)acrylaten des SiC-Typs wurden bereits in der Vergangenheit Anstrengungen unternommen, im Sinne einer kostengünstigeren Alternative Silikon(meth)acrylate auch als SiOC-Typen, bei denen die (Meth)acrylatgruppe(n) oder die (Meth)acrylatgruppe(n) tragenden organischen Reste über eine Silicium-Sauerstoff-Kohlenstoff-Bindung gebunden vorliegen, bereitzustellen. Diese Zielsetzung verfolgend stellen die Lehren der DE 2948708 A1 und der DE 3426087 A1 auf den Einsatz von Chlorsiloxanen ab, die mit hydroxyfunktionellen Acrylatestern wie beispielsweise Pentaerythritoltriacrylat oder Hydroxypropylacrylat, zu Silikonacrylaten des SiOC-Typs umgesetzt und diese dann in Trennbeschichtungen verwendet werden. Die Nachteile dieser Verfahren resultieren aus dem Einsatz von Chlorsiloxanen, deren Verknüpfung mit den hydroxyfunktionellen (Meth)acrylatestern unvermeidbar Salzsäure (HCl) freisetzt. Das angestrebte SiOC-verknüpfte Silikon(meth)acrylat ist jedoch hydrolyseempfindlich, so dass man zum effizienten Abfangen der freigesetzten Salzsäure hohe Aminmengen einsetzen muss, die ihrerseits zu hohen Salzfrachten führen. In der betrieblichen Praxis gewärtigt man daher einen erheblichen Filtrationsaufwand sowie damit einhergehende Produktverluste.

Ein weiterer Nachteil der so hergestellten Silikon(meth)acrylate des SiOC-Typs kommt aus deren Geruchsbehaftung, die speziell bei deren Verwendung für Hygieneartikel nicht akzeptabel ist. Die in jüngerer Zeit erfolgte, kritische Einstufung cyclischer Siloxane als SVHC-Stoffe (Substances of Very High Concern) schmälert darüber hinaus nochmals die Attraktivität dieser Herstellrouten, da cyclische Siloxane aus den eingesetzten Chlorsiloxanen ohne das Auftreten einer Reäquilibrierung nicht abdestilliert werden können und sich sogar bei Lagerung der Folgeprodukte, katalysiert durch Säure- respektive Salzreste, nachbilden können.

Zur Bewältigung dieser Nachteile bedient sich die DE 10359764 A1 der dehydrogenativen Kupplung von Wasserstoffsiloxanen mit hydroxyfunktionellen (Meth)acrylatestern. Bei dieser in Gegenwart eines Katalysators durchgeführten Reaktion wird Wasserstoffgas freigesetzt, das unter Aufschäumen die Reaktionsmatrix verlässt. Da (Meth)acrylatgruppen in Abwesenheit von Sauerstoff verstärkt zur Polymerisation neigen, andererseits die Anwesenheit von Sauerstoff bei einem Wasserstoff-freisetzenden Prozess aufgrund der zu beachtenden Explosionsgrenzen immer sehr problematisch zu bewerten ist (Knallgasbildung), ist die Durchführung dieses Verfahrens aus prozesstechnischer Sicht sehr anspruchsvoll. Erschwerend werden für diese Reaktion relativ hohe Einsatzmengen eines exotischen Organoborankatalysators benötigt, der giftig und kostspielig ist und auch nicht aus dem Produkt entfernt werden kann.

In Sicht dieser bis heute nur unbefriedigende Resultate liefernden Anstrengungen besteht das zu lösende technische Problem darin, ein einfaches, zuverlässiges und zudem kostengünstiges Verfahren zur Herstellung von Silikon(meth)acrylaten des SiOC-Typs zu finden, welches die Nachteile der bisher bekannten Verfahren überwindet beziehungsweise gar nicht aufweist. Ein besonderes Erfordernis kommt aus dem Wunsch, auf den Einsatz von Chlor-substituierten Siloxanen zu verzichten. Außerhalb des ohnehin darauf ausgerichteten Produktionsumfeldes von Direktsynthesebetreibern (Müller-Rochow-Synthese) gestaltet sich der Umgang mit den stark ätzenden und hochkorrosiven Chlorsilanen und/oder -siloxanen zunehmend problematisch und bedingt hohe Investitionen hinsichtlich Logistik, Handhabung, Werkstoffauswahl, Apparatetechnik, Sicherheitstechnik sowie der Entsorgung.

Überraschenderweise wurde nun gefunden, dass man ohne alle zuvor genannten Schwierigkeiten zu Silikon(meth)acrylaten des SiOC-Typs gelangt, indem man Acetoxysilikone mit hydroxyfunktionellen (Meth)acrylatestern umsetzt. Unter Acetoxysilikonen werden im Rahmen dieser Erfindung Organosiloxane verstanden, die an einem oder mehreren Siliziumatomen eine oder mehrere Acetoxygruppen tragen. Die Acetoxysilikone weisen also mindestens eine Gruppe der Formel ≡Si-OAc auf, wobei "OAc" für die Acetoxygruppe und "≡" für die verbleibenden drei Valenzen des Siliziumatoms stehen. Ein Siliziumatom kann dabei ein oder mehrere Acetoxygruppen tragen.

Als reaktive Ausgangsmaterialien zur Herstellung von SiOC-basierten Silikonderivaten, insbesondere von SiOC-basierten Polyethersiloxanen stellen Acetoxysilikone des linearen beziehungsweise verzweigten Strukturtyps bedeutsame Verbindungsklassen dar.

Anknüpfend an die obigen Ausführungen ist es bevorzugt im Rahmen dieser Erfindung konsequenterweise auch bei der Herstellung der Acetoxysilikone auf die stark ätzenden und hochkorrosiven Chlorsilane und/oder -siloxane zu verzichten, die jedoch in der technischen Geschichte der Acetoxysilikone vielfach eingesetzte Startmaterialien waren.

So bedienen sich ältere Routen zum Beispiel zur Herstellung verzweigter SiOC-verknüpfter Silikonpolyether unter anderem auch der säurekatalysierten Umsetzung von Chlorsilanen mit Essigsäure in Gegenwart von Siloxancyclen (US 4380451). Neben den Eingangs dargelegten prinzipiellen Nachteilen einer Chlorchemie ist diesen Verfahren zu eigen, dass der Austausch von Silicium-gebundenem Chlor gegen Acetoxyfunktionen ein unvollkommener ist, wie aus der (in ibid., Spalte 4, 1. Zeile) vorgeschlagenen Siloxanintermediatformel hervorgeht. Ähnlich problematisch ist die Lehre der EP 0003285 B1 zu sehen, die ein Verfahren zur Herstellung von linearen und verzweigten äquilibrierten Organosiloxanen beschreibt durch Umsetzen eines Chlorsilans oder partiellen Hydrolysaten hiervon mit Organosiloxanen und einbasischen Carbonsäuren in Gegenwart eines sauren Äquilibrierkatalysators. Auf die GC-Analytik (GC: Gaschromatographie) der dort offenbarten α,ω-Diacetoxy-polydimethylsiloxane abstellend heißt es (ibid., Seite 6, Zeile 30), dass die in geringen Mengen vorliegenden Chlorsiloxane bei der Auswertung der GC-Messung nicht berücksichtigt werden. Andererseits bewegen sich die dortigen Restchlorgehalte zwischen etwa 0,2 % bis 3,0 %, wie die Schrift (ibid.) auf Seite 4, Zeilen 44 bis 46 ausführt.

Die US 3595885 beschreibt ein Verfahren zur Herstellung äquilibrierter Acyloxy-funktionalisierter Siloxane ausgehend von äquilibrierten Chlorsiloxanylsulfaten durch Umsetzung mit Carbonsäuren und/oder Carbonsäuresalzen und/oder Carbonsäureanhydriden. Die US 3595885 lehrt (Spalte 5, Zeilen 72-74), dass man mit Schwefelsäuregruppen enthaltenden Produkten rechnen muss (-SO₄-und/oder -OSO₃H gebunden an Si), wenn man reine Carbonsäuren und/oder Carbonsäureanhydride einsetzt. Die den verbleibenden Carbonsäuresalz-Weg stützenden Beispiele belegen jedoch auch nicht die Schwefelsäure-Freiheit der erhaltenen Acyloxysiloxane, was aber für die Zielstellung der dort beschriebenen Substanzen als Komponenten in kalthärtenden Silikonkautschuken bedeutungslos ist, da man diese mit hydroxyfunktionellen Silikonen in Gegenwart eines Zinnkatalysators unter Hydrolyse der Siloxanylsulfat-Funktionen zur Umsetzung bringt. Diese von fraglicher Produktqualität gekennzeichnete Chlorroute ist für anspruchsvolle Anwendungen mithin nicht geeignet (siehe hierzu auch Beispiel IV, < 0,5% Chlorgehalt). Zudem ist die dortige Auslobung äquilibrierter Acyloxy-funktionalisierter Siloxane nicht zutreffend. Sollten zum Beispiel in die Silikongerüste eingebaute, verbrückende Sulfatogruppen durch das Behandeln mit Carbonsäuresalzen herausgelöst werden, so entstehen dabei stets kürzere, mit Acyloxygruppen verschlossene Spaltprodukte, so dass die entstehende Mischung und das insbesondere im Vergleich mit dem Ausgangsmaterial keinesfalls ein echtes Äquilibrat ist.

Die veröffentlichten Druckschriften WO 2019/105608 A1 und EP 3492513 A1 als auch die bisher unveröffentlichte Patentanmeldung PCT/EP2019/061655 widmen sich der Herstellung SiOC-verknüpfter Polyethersiloxane, wobei als reaktive Zwischenstufen trifluormethansulfonsaure, äquilibrierte Acetoxysiloxane des linearen beziehungsweise auch des verzweigten Strukturtyps verwendet werden. Des Weiteren richten sich die noch nicht veröffentlichten europäischen Patentanmeldungen EP18210035.4 und EP19176876.1 speziell auf die Herstellung äquilibrierter Acetoxysiloxane.

So stellen die WO 2019/105608 und die EP 3492513 A1 auf ein Verfahren zur Herstellung trifluormethansulfonsaurer, endäquilibrierter, Acetoxygruppen-tragender Siloxane ab, bei welchem man cyclische Siloxane, wie D₄ und/oder D₅, und/oder Mischungen cyclischer-verzweigter Siloxane vom D/T-Typ unter Einsatz von Trifluormethansulfonsäure als Katalysator mit Acetanhydrid und unter Zusatz von Essigsäure umsetzt. Die dabei verwendeten cyclischerverzweigten Siloxane vom D/T-Typ sind sowohl in der europäischen Patentanmeldung EP 3321304 A1 als auch in der noch nicht offengelegten Patentanmeldung EP17169876.4 detailliert beschrieben.

Die europäische Patentanmeldung EP 3321304 A1 offenbart, dass man zu den Mischungen cyclischer-verzweigter Siloxane vom D/T-Typ, die ausschließlich aus D- und T-Einheiten aufweisenden Siloxanen bestehen und deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, ≤ 2 Molprozent, bevorzugt kleiner 1 Molprozent ist, und dass sie des Weiteren vorteilhafterweise zumindest 5 Gew.-% Siloxancyclen, wie vorzugsweise Octamethylcyclotetrasiloxan (D₄), Decamethylcyclopentasiloxan (D₅) und/oder deren Mischungen enthalten, gelangt, indem man ein Trialkoxysilan in einem Lösemittel mit Siloxancyclen und/oder α,ω-Dihydroxy-polydimethylsiloxan unter Zugabe von Wasser und in Anwesenheit von mindestens einem sauren Katalysator umsetzt.

Ergänzend führt die EP17169876.4 hierzu aus, dass man zu den Mischungen cyclischer-verzweigter, ausschließlich D- und T-Einheiten aufweisender Siloxane, deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind, gelangt, indem man eine sauer katalysierte Äquilibrierung von Trialkoxysilanen mit Siloxancyclen und/oder α,ω- Dihydroxy-polydimethylsiloxan in Anwesenheit von mindestens einem sauren Katalysator und danach eine durch Wasserzugabe eingeleitete Hydrolyse- und Kondensationsreaktion sowie Zugabe eines Silicium-haltigen Lösemittels, gefolgt von einer destillativen Abtrennung des freigesetzten Alkohols, im System vorhandenen Wassers und Silicium-haltigen Lösemittels sowie einer Neutralisation oder Abtrennung des sauren Katalysators und gegebenenfalls Abtrennung womöglich gebildeter Salze vornimmt. Dabei soll das Siliciumhaltige Lösungsmittel vorzugsweise die isomeren Siloxancyclen Oktamethylcyclotetrasiloxan (D₄), Dekamethylcyclopentasiloxan (D₅) und/oder deren Mischungen umfassen, und vorteilhafterweise in Massenverhältnissen von Silicium-haltigem Lösemittel zum D- und T-Einheiten aufweisenden Siloxan von 1:1 bis 5:1 eingesetzt werden.

Die noch nicht veröffentlichte Patentanmeldung PCT/EP2019/061655 beschreibt trifluormethansulfonsaure, äquilibrierte α,ω-Diacetoxypolydimethylsiloxane, die dadurch erhalten werden, dass man cyclische Siloxane, insbesondere D₄ und/oder D₅ unter Einsatz von Trifluormethansulfonsäure als Katalysator mit Acetanhydrid und vorzugsweise unter Zusatz von Essigsäure umsetzt.

Die noch nicht veröffentlichte Patentanmeldung EP18210035.4 beschreibt ein Verfahren zur Herstellung linearer oder verzweigter Acetoxyfunktionen tragender Siloxane, indem man Alkoxygruppen tragende Silane und/oder Siloxane, und/oder Acetoxygruppen tragende Silane und/oder Siloxane, und/oder Hydroxygruppen tragende Silane und/oder Siloxane und des Weiteren gegebenenfalls einfache Siloxancyclen und/oder DT-Cyclen mit Essigsäureanhydrid, Perfluoralkansulfonsäure (insbesondere Trifluormethansulfonsäure) sowie vorzugsweise Essigsäure zur Umsetzung bringt.

Die noch nicht veröffentlichte Patentanmeldung EP19176876.1 offenbart Reaktionssysteme zur Herstellung von Acetoxyfunktionen tragenden Siloxanen mit Kettenlängen größer 3 Siliziumatomen, die Alkoxygruppen tragende Silane und/oder Siloxane und/oder Acetoxygruppen tragende Silane und/oder Siloxane, und/oder Hydroxygruppen tragende Silane und/oder Siloxane und/oder einfache Siloxancyclen und/oder DT-Cyclen, sowie ein Reaktionsmedium, aus Essigsäureanhydrid, Brönstedtsäure sowie Essigsäure umfassen. Dabei werden Brönstedtsäuren mit einem pKa-Wert≤ -1,30, bevorzugt mit einem pKa-Wert≤ - 2,90, besonders bevorzugt mit einem pKa-Wert ≤ -4,90 eingesetzt, wobei die Essigsäure im Reaktionssystem in Mengen von 0,4 bis 15,0 Gewichtsprozent, vorzugsweise 0,5 bis 10,0 Gewichtsprozent, bevorzugt 0,8 bis 6,5 Gewichtsprozent, besonders bevorzugt in Mengen von 1,0 bis 6,0 Gewichtsprozent, bezogen auf das Reaktionssystem, enthalten ist.

Die noch nicht veröffentlichte Patentanmeldung EP19176876.1 stellt weiter auf das molare Mengenverhältnis von eingesetzter Brönstedtsäure zu Essigsäure ab, das bei Brönstedtsäuren der Kategorie A), welche einen pKa-Wert ≤ -4,90 aufweisen, im Bereich von ≥ 1/30 und ≤ 1/3 liegt und bei Brönstedtsäuren der Kategorie B), welche einen pKa-Wert von ≤ - 1,30 bis ≥ - 4,80 aufweisen, im Bereich von ≥ 1/10 und ≤ 1 liegt und das bei Mischungen von Brönstedtsäuren der Kategorie A) und Kategorie B) im Bereich von ≥ 1/30 und ≤ 1 liegt. Hierbei sollen der alleinige Einsatz von Trifluormethansulfonsäure sowie von Trifluormethansulfonsäure und Essigsäure ausgenommen sein und/oder die eingesetzte Brönstedtsäure zumindest anteilsweise einen pKa-Wert zwischen -1,3 und > -13,5 aufweisen.

Die noch nicht veröffentlichte Patentanmeldung EP19176874.6 beschreibt die Herstellung von acetoxymodifizierten Siloxanen, indem man in einem ersten Schritt cyclische-verzweigte Siloxane vom D/T-Typ säurekatalysiert mit Acetanhydrid gegebenfalls in Abmischung mit einfachen Siloxancyclen und/oder Hydroxygruppen tragenden Siloxanen und/oder Acetoxy- und/oder Alkoxygruppen tragenden Silanen und/oder Siloxanen zu Acetoxygruppen tragenden, verzweigten Siloxanen umsetzt und in einem zweiten Schritt die Äquilibrierung des Acetoxymodifizierten Siloxans mit Säuren, vorzugsweise Supersäuren, insbesondere unter Zusatz von Essigsäure durchführt, wobei es sich bei den cyclischen-verzweigten Siloxanen vom D/T-Typ um Mischungen cyclischer-verzweigter Siloxane vom D/T-Typ handelt, die neben D- und T-Einheiten aufweisenden Siloxanen gegebenenfalls auch Siloxane mit Q-Einheiten enthalten, mit der Maßgabe, dass bei diesen Mischungen der Anteil an Si-Atomen stammend aus Q-Einheiten ≤ 10 Massen-% bis ≥ 0 Massen-%, bevorzugt ≤ 5 Massen-% bis ≥ 0 Massen-% bezogen auf die Gesamtheit aller Si-Atome ausmacht.

Die ebenfalls noch nicht veröffentlichte Patentanmeldung EP19176871.2 offenbart die Herstellung von sauren, vorzugsweise supersauren, insbesondere trifluormethansulfonsauren, endäquilibrierten, Acetoxygruppen tragenden Siloxanen, indem man cyclische Siloxane, insbesondere umfassend D₄ und/oder D₅ und/oder Mischungen cyclischer-verzweigter Siloxane vom D/T-Typ gegebenenfalls in Abmischungen mit Hydroxygruppen tragenden Siloxanen und/oder Acetoxy- und/oder Alkoxygruppen tragenden Silanen und/oder Siloxanen unter Einsatz von Säure, vorzugsweise Supersäure, insbesondere Trifluormethansulfonsäure als Katalysator mit Acetanhydrid und unter Zusatz von Essigsäure umsetzt, wobei es sich bei den cyclischen-verzweigten Siloxanen vom D/T-Typ um Mischungen cyclischer-verzweigter Siloxane vom D/T-Typ handelt, die neben D- und T-Einheiten aufweisenden Siloxanen gegebenenfalls auch Siloxane mit Q-Einheiten enthalten, mit der Maßgabe, dass bei diesen Mischungen der Anteil an Si-Atomen stammend aus Q-Einheiten ≤ 10 Massen-% bis ≥ 0 Massen-%, bevorzugt ≤ 5 Massen- % bis ≥ 0 Massen-% bezogen auf die Gesamtheit aller Si-Atome ausmacht.

In US 4 824 922 A wird ein Chlorhaltiges Silan mit einem hydroxyfunktionellen Acrylester umgesetzt.

Besonders bevorzugt gemäß den Lehren der hier aufgeführten Schriften ist es, endäquilibrierte Brönstedtsaure und ganz besonders bevorzugt endäquilibrierte trifluormethansulfonsaure Acetoxygruppen-tragende Siloxane herzustellen und weiterzuverarbeiten. Dies gilt ebenso für die vorliegende Erfindung.

Mit dem Begriff "endäquilibriert" ist gemeint, dass das Äquilibriergleichgewicht erreicht worden ist, dass sich bei einer Temperatur von 23°C und einem Druck von 1013,25 hPa einstellt. Als Indikator für das Erreichen des Äquilibriergleichgewichtes kann der gaschromatographisch bestimmte Gesamtcyclengehalt, definiert als die Summe der D₄-, D₅-, D₆-Gehalte bezogen auf die Siloxanmatrix und festgestellt nach der Derivatisierung der α,ω-Diacetoxypolydimethylsiloxane zu den entsprechenden α,ω-Diisopropoxypolydimethylsiloxanen beziehungsweise nach der Derivatisierung der verzweigten Acetoxysiloxane zu den entsprechenden verzweigten Isopropoxysiloxanen, herangezogen werden. Der erfindungsgemäße Einsatz der Essigsäure ermöglicht hier die problemlose Unterschreitung sonst üblicher Gleichgewichtsanteile von etwa 13 Gewichtsprozent des Gesamtcyclengehaltes bei den linearen α,ω-Diacetoxypolydimethylsiloxanen und von etwa 8 Gewichtsprozent des Gesamtcyclengehaltes bei den verzweigten Acetoxysiloxanen. Demzufolge entspricht es einer ganz besonders bevorzugten Ausführungsform, wenn Gleichgewichtsanteile des Gesamtcyclengehaltes von kleiner 13, vorzugsweise kleiner 12 Gewichtsprozent bei den linearen α,ω-Diacetoxypolydimethylsiloxanen, und Gleichgewichtsanteile des Gesamtcyclengehaltes von kleiner 8, vorzugsweise kleiner 7 Gewichtsprozent bei den verzweigten Acetoxysiloxanen unterschritten werden. Die Derivatisierung zu den α,ω-Diisopropoxypolydimethylsiloxanen beziehungsweise zu den verzweigten Isopropoxysiloxanen wird hierbei bewusst gewählt, um eine unter den Bedingungen der gaschromatographischen Analyse gegebenenfalls erfolgende, thermisch induzierte Rückspaltungsreaktion der α,ω-Diacetoxypolydimethylsiloxane beziehungsweise der verzweigten Acetoxysiloxane zu verhindern (zur Rückspaltungsreaktion siehe u.a. J. Pola et al., Collect. Czech. Chem. Commun. 1974, 39(5), 1169-1176 und auch W. Simmler, Houben-Weyl, Methods of Organic Chemistry, Vol. VI/2, 4th Edition, O-Metal Derivates of Organic Hydroxy Compounds S. 162 ff)).

Alle hier referenzierten auf den Einsatz von Chlorsilanen und/oder -siloxanen und/oder Chlorsiloxanylsulfaten verzichtenden technischen Lehren zur Herstellung Brönstedt-saurer, vorzugsweise trifluormethansulfonsaurer Acetoxygruppen-tragender Siloxane linearen beziehungsweise verzweigten Strukturtyps sind vollumfänglich Teil des Offenbarungsgehalts der vorliegenden Erfindung.

Wie einleitend beschrieben, bestand also die Aufgabe der vorliegenden Erfindung darin, zumindest einen Nachteil der bislang eingesetzten Verfahren zur Herstellung von Silikon(meth)acrylaten zu überwinden.

Überraschenderweise wurde nun gefunden, dass ein Verfahren zur Herstellung von Silikon(meth)acrylaten, bei dem ein Acetoxysilikon mit einem hydroxyfunktionellem (Meth)acrylsäureester umgesetzt wird, diese Aufgabe löst.

Gelöst wird die Aufgabe der vorliegenden Erfindung also durch die Gegenstände der unabhängigen Ansprüche. Vorteilhafte Ausgestaltungen der Erfindung sind in den nachgeordneten Ansprüchen, den Beispielen und der Beschreibung angegeben.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Werden nachfolgend Mittelwerte angegeben, so handelt es sich, wenn nicht anders angegeben, um Zahlenmittel. Werden nachfolgend Messwerte, Parameter oder Stoffeigenschaften angegeben, die durch Messung bestimmt werden, so handelt es sich, wenn nicht anders angegeben, um Messwerte, Parameter oder Stoffeigenschaften gemessen bei 25 °C sowie vorzugsweise bei einem Druck von 101325 Pa (Normaldruck).

Werden nachfolgend Zahlenbereiche in der Form "X bis Y" angegeben, wobei X und Y die Grenzen des Zahlenbereichs darstellen, so ist dies gleichbedeutend mit der Angabe "von mindestens X bis einschließlich Y", sofern nicht anders angegeben. Bereichsangaben schließen die Bereichsgrenzen X und Y also mit ein, sofern nicht anders angegeben.

Der Ausdruck "(meth)acryl" steht für "methacryl" und/oder "acryl".

Wo immer Moleküle beziehungsweise Molekülfragmente ein oder mehrere Stereozentren aufweisen oder aufgrund von Symmetrien in Isomere unterschieden werden können oder aufgrund anderer Effekte, wie zum Beispiel eingeschränkter Rotation, in Isomere unterschieden werden können, sind alle möglichen Isomere von der vorliegenden Erfindung miteingeschlossen.

Die nachfolgenden Formeln (I) und (III) beschreiben Verbindungen oder Reste, die aus Wiederholungseinheiten aufgebaut sind, wie beispielsweise sich wiederholende Fragmente, Blöcke oder Monomereinheiten, und eine Molgewichtsverteilung aufweisen können. Die Häufigkeit der Wiederholungseinheiten wird durch Indizes angegeben. Die in den Formeln verwendeten Indizes sind als statistische Mittelwerte (Zahlenmittel) zu betrachten. Die verwendeten Indexzahlen sowie die Wertbereiche der angegebenen Indizes werden also Mittelwerte der möglichen statistischen Verteilung der tatsächlichen vorhandenen Strukturen und/oder deren Mischungen verstanden. Die verschiedenen Fragmente beziehungsweise Wiederholungseinheiten in den nachfolgenden Formeln (I) und (III) können statistisch verteilt sein. Statistische Verteilungen sind blockweise aufgebaut mit einer beliebigen Anzahl an Blöcken und einer beliebigen Sequenz oder unterliegen einer randomisierten Verteilung, sie können auch alternierend aufgebaut sein, oder auch über die Kette, sofern eine solche vorliegt, einen Gradienten bilden, insbesondere können sie auch alle Mischformen bilden, bei denen gegebenenfalls Gruppen unterschiedlicher Verteilungen aufeinander folgen können. Werden also im Rahmen der vorliegenden Erfindung Verbindungen, wie z. B. Acetoxysilikone oder Silikon(meth)acrylate, beschrieben, die verschiedene Einheiten mehrfach aufweisen können, so können diese sowohl ungeordnet, z.B. statistisch verteilt, oder geordnet in diesen Verbindungen vorkommen. Die Angaben zur Anzahl von Einheiten in solchen Verbindungen sind als Mittelwert (Zahlenmittel), gemittelt über alle entsprechenden Verbindungen, zu verstehen. Spezielle Ausführungen können dazu führen, dass die statistischen Verteilungen durch die Ausführungsform Beschränkungen erfahren. Für alle Bereiche, die nicht von der Beschränkung betroffen sind, ändert sich die statistische Verteilung nicht.

Ein erster Gegenstand der Erfindung ist Verfahren zur Herstellung von Silikon(meth)acrylaten, dadurch gekennzeichnet, dass mindestens ein Acetoxysilikon mit mindestens einem hydroxyfunktionellem (Meth)acrylsäureester umgesetzt wird.

Es ist bevorzugt, dass das Acetoxysilikon eine Verbindung der Formel (I) ist,

Mₘ₁M^{AcO}ₘ₂D_{d1}D^{AcO}_{d2}TₜQ_{q} Formel (I),

mit
M = [R₃SiO_{1/2}];
M^{AcO} = [R₂(AcO)SiO_{1/2}];
D = [R₂SiO_{2/2}];
D^{AcO} = [R(AcO)SiO_{2/2}];
T = [RSiO_{32/2}];
Q = [SiO_{4/2}];
m1 = 0 bis 32, vorzugsweise 0 bis 22, insbesondere 0;
m2 = 0 bis 32, vorzugsweise 1 bis 10, insbesondere 2;
d1 = 1 bis 1000, vorzugsweise 5 bis 500, insbesondere 10 bis 400;
d2 = 0 bis 10, vorzugsweise 0 bis 5, insbesondere 0;
t = 0 bis 10, vorzugsweise 0 bis 5, insbesondere 1 bis 5;
q = 0 bis 10, vorzugsweise 0 bis 5, insbesondere 1 bis 5;
worin
   - R: jeweils unabhängig voneinander ausgewählt ist aus der Gruppe bestehend aus einbindigen organischen Resten,
   vorzugsweise jeweils unabhängig voneinander ausgewählt ist aus der Gruppe bestehend aus einbindigen Kohlenwasserstoffresten mit 1 bis 30 Kohlenstoffatomen,
   insbesondere Methyl ist;
   - AcO: für eine Acetoxygruppe steht;
mit der Maßgabe, dass gilt:
   m1+m2 = mindestens 2, vorzugsweise 2 bis 20, insbesondere 3 bis 10;
   m2+d2 = mindestens 1, vorzugsweise 2 bis 10, insbesondere 2 bis 6.

Es ist weiterhin bevorzugt, dass das Acetoxysilikon nicht cyclisch ist. Es ist daher bevorzugt, dass für das Acetoxysilikon der Formel (I) gilt: m1+m2 = 2+t+2*q.

Der einbindige organische Rest R des Acetoxysilikons der Formel (I) ist dabei von AcO unterschiedlich. Es ist weiterhin bevorzugt, dass der einbindige organische Rest R des Acetoxysilikons der Formel (I) jeweils unabhängig ausgewählt ist aus der Gruppe bestehend aus linearen oder verzweigten, gesättigten oder ungesättigten, aromatischen oder aliphatischen, substituierten oder unsubstituierten Kohlenwasserstoffresten. Weiter bevorzugt ist der einbindige organische Rest R des Acetoxysilikons der Formel (I) jeweils unabhängig ausgewählt aus gesättigten Kohlenwasserstoffresten mit 1 bis 30 Kohlenstoffatomen oder aromatischen Kohlenwasserstoffresten mit 6 bis 30 Kohlenstoffatomen, noch weiter bevorzugt aus gesättigten Kohlenwasserstoffresten mit 1 bis 14 Kohlenstoffatomen oder monocyclischen aromatischen Kohlenwasserstoffresten. Noch weiter bevorzugt ist der einbindige organische Rest R des Acetoxysilikons der Formel (I) jeweils unabhängig ausgewählt aus der Gruppe bestehend aus Methyl, Ethyl, Propyl und Phenyl. Insbesondere ist R = Methyl.

Die Acetoxysilikone können dabei auf verschiedenen Synthesewegen hergestellt werden.

Es ist bevorzugt, dass die Acetoxysilikone durch Umsetzung von
a) Alkoxygruppen tragenden Silanen und/oder Siloxanen, und/oder
b) Acetoxygruppen tragenden Silanen und/oder Siloxanen, und/oder
c) Hydroxygruppen tragenden Silanen und/oder Siloxanen, und/oder
d) einfachen Siloxancyclen und/oder DT-Cyclen,
mit Essigsäureanhydrid, sowie vorzugsweise Essigsäure, und mindestens einer Brönstedtsäure mit einem pKa von ≤ -1,3, bevorzugt einer Supersäure, weiter bevorzugt Perfluoralkansulfonsäure, besonders bevorzugt Trifluormethansulfonsaure als Katalysator hergestellt werden.

Als Silane werden vorzugsweise Dialkoxydialkylsilane und/oder Trialkoxyalkylsilane, weiter bevorzugt Dialkoxydimethylsilane und/oder Trialkoxymethylsilane, insbesondere Diethoxydimethylsilan und/oder Triethoxymethylsilan eingesetzt.

Als Siloxane werden vorzugsweise Tetramethyldisiloxan, α,ω-Dihydrogen-polydimethylsiloxane, Poly(methylhydrogen)siloxane, α,ω-Dialkoxypolydimethylsiloxane und/oder α,ω-Divinylpoly-dimethylsiloxane eingesetzt.

Einfache Siloxancyclen im Sinne der Erfindung sind nur aus D-Einheiten aufgebaut. Bevorzugt sind einfache Siloxancyclen sind Octamethylcyclotetrasiloxan (D₄), Decamethylcyclopentasiloxan (D₅), Dodecamethylcyclohexasiloxan (D₆) und/oder deren Mischungen.

DT-Cyclen im Sinne der Erfindung sind cyclische-verzweigte Siloxane vom D/T-Typ, die im Wesentlichen, vorzugsweise ausschließlich, aus D- und T-Einheiten bestehen und diese Einheiten zwingend enthalten. Bevorzugt ist, dass deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, ≤ 2 Molprozent, bevorzugt kleiner 1 Molprozent ist, oder aber größer 2 und kleiner 10 Molprozent ist.

Bei den cyclischen-verzweigten Siloxanen vom D/T-Typ kann es sich auch um Mischungen cyclischer-verzweigter Siloxane vom D/T-Typ handeln, die neben D- und T-Einheiten aufweisenden Siloxanen gegebenenfalls auch Siloxane mit Q-Einheiten enthalten, mit der Maßgabe, dass bei diesen Mischungen der Anteil an Si-Atomen stammend aus Q-Einheiten ≤ 10 Massen-% bis ≥ 0 Massen-%, bevorzugt ≤ 5 Massen-% bis ≥ 0 Massen-% bezogen auf die Gesamtheit aller Si-Atome ausmacht.

Als saure Katalysatoren eignen sich die nach dem Stand der Technik bekannten starken Säuren (Äquilibriersäuren) für Siloxane, also Mineralsäuren, wie beispielsweise Schwefelsäure, aber auch Sulfonsäuren, Fluoralkylsulfonsäuren wie zum Beispiel Trifluormethansulfonsäure, saure Tonerden oder saure Ionenaustauscherharze, wie beispielsweise die unter den Markennamen Amberlite^{®}, Amberlyst^{®} oder Dowex^{®} und Lewatit^{®} bekannten Produkte. Bevorzugt sind dabei Supersäuren. Unter Supersäuren werden Säuren bezeichnet, die stärker als konzentrierte (100-prozentige) Schwefelsäure (H₂SO₄: pKa-Wert = -3,0) sind. Bevorzugt werden Perfluoralkansulfonsäuren, besonders bevorzugt Trifluormethansulfonsaure eingesetzt.

Ausführliche Zusammenstellungen der pKa-Werte von Brönstedtsäuren findet man in der Literatur und können dieser entnommen werden, z.B. CRC Handbook of Chemistry and Physics 99th edition aber auch in elektronischen Quellen wie zum Beispiel Evans pKa Table (evans.rc.fas.harvard.edu/pdf/evans_pKa_table.pdf) und "Das Periodensystem der Elemente online, pKs-Werte absteigend nach Wert sortiert", 2010-2019, ^{©}René Rausch. Zur Bestimmung des pKa-Werts stehen außerdem die dem Fachmann bekannten Methoden zur Verfügung. Abseits von eventuell abweichend referenzierten pKa-Werten erweist sich die potentiometrische Titration als eine besonders geeignete Methode zur exakten Bestimmung von pKa-Werten im Sinne der vorliegenden Erfindung. Diese Methode ist lange etabliert, vgl. z.B. Benet L.Z., Goyan J.E.: Potentiometric determination of dissociation constants; J. Pharm. Sci. 56, 665-680 (1967).

Es ist außerdem bevorzugt, solche Acetoxysilikone einzusetzen, die die durch Umsetzung cyclischer Siloxane, insbesondere umfassend D₄ (Octamethylcyclotetrasiloxan) und/oder D₅ (Decamethylcyclopentasiloxan), und/oder cyclischer-verzweigter Siloxane vom D/T-Typ, bevorzugt durch Umsetzung cyclischer-verzweigter Siloxane vom D/T-Typ (= DT-Cyclen), besonders bevorzugt durch Umsetzung von
a) Mischungen cyclischer-verzweigter Siloxane vom D/T-Typ, die ausschließlich aus D- und T-Einheiten aufweisenden Siloxanen bestehen und deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, ≤ 2 Molprozent, bevorzugt kleiner 1 Molprozent ist, und die bevorzugt zumindest 5 Gewichtsprozent Siloxancyclen, wie vorzugsweise Octamethylcyclotetrasiloxan (D₄), Decamethylcyclopentasiloxan (D₅) und/oder deren Mischungen enthalten;
   oder
b) Mischungen cyclischer-verzweigter, ausschließlich D- und T-Einheiten aufweisender Siloxane deren mit ²⁹Si-NMR-Spektroskopie bestimmbarer summarischer Anteil der in der Siloxanmatrix vorhandenen D- und T-Einheiten, die Si-Alkoxy- und/oder SiOH-Gruppen aufweisen, größer 2 und kleiner 10 Molprozent sind,
unter Einsatz von Trifluormethansulfonsäure als Katalysator mit Acetanhydrid, vorzugsweise unter Zusatz von Essigsäure hergestellt werden.

Es ist weiterhin bevorzugt, Acetoxysilikone einzusetzen, die durch Umsetzung von cyclischen Siloxanen, insbesondere umfassend D₄ und/oder D₅, unter Einsatz von Trifluormethansulfonsäure als Katalysator mit Acetanhydrid, vorzugsweise unter Zusatz von Essigsäure, hergestellt wurden.

Es ist weiterhin bevorzugt Acetoxysilikone einzusetzen, die mehr als 3 Siliziumatomen aufweisen und hergestellt sind, indem man
a) Alkoxygruppen tragende Silane und/oder Siloxane, und/oder
b) Acetoxygruppen tragende Silane und/oder Siloxane, und/oder
c) Hydroxygruppen tragende Silane und/oder Siloxane und/oder
d) einfache Siloxancyclen, insbesondere umfassend D₄ und/oder D₅ und / oder DT-Cyclen,

mit Essigsäureanhydrid, Brönstedtsäure sowie Essigsäure umsetzt,
wobei Brönstedtsäuren mit einem pKa-Wert ≤ -1,30, bevorzugt mit einem pKa-Wert ≤ -2,90, besonders bevorzugt mit einem pKa-Wert ≤ -4,90 eingesetzt werden und und wobei
die Essigsäure in Mengen von 0,4 bis 15,0 Gewichtsprozent, vorzugsweise 0,5 bis 10,0 Gewichtsprozent, bevorzugt 0,8 bis 6,5 Gewichtsprozent, besonders bevorzugt in Mengen von 1,0 bis 6,0 Gewichtsprozent, bezogen auf die Reaktionsmatrix, enthalten ist,
wobei das molare Mengenverhältnis von eingesetzter Brönstedtsäure zu Essigsäure bei Brönstedtsäuren der Kategorie A), welche einen pKa-Wert ≤ -4,90 aufweisen, im Bereich von ≥ 1/30 und ≤ 1/3 liegt und
bei Brönstedtsäuren der Kategorie B), welche einen pKa-Wert von ≤ - 1,30 bis ≥ - 4,80 aufweisen, im Bereich von ≥ 1/10 und ≤ 1 liegt und
bei Mischungen von Brönstedtsäuren der Kategorie A) und Kategorie B) im Bereich von ≥ 1/30 und ≤ 1 liegt,
mit der Maßgabe, dass (i) entweder der alleinige Einsatz von Trifluormethansulfonsäure sowie von Trifluormethansulfonsäure und Essigsäure ausgenommen ist, und/oder dass (ii) die eingesetzte Brönstedtsäure zumindest anteilsweise einen pKa-Wert zwischen -1,3 und > -13,5 aufweist,
wobei die Brönstedtsäure optional zumindest anteilsweise in situ bereitgestellt wird, vorzugsweise durch Einsatz einer Brönstedtsäuresalz-Brönstedtsäure-Kombination, wie vorzugsweise Aluminiumtriflat/Methansulfonsäure, Bismuttriflat/Methansulfonsäure und/oder Natriumtriflat/ Methansulfonsäure und/oder Natriumtriflat/ Schwefelsäure.

Weiterhin ist es bevorzugt, solche Acetoxysilikone einzusetzen, die hergestellt sind, indem man in einem ersten Schritt cyclische-verzweigte Siloxane vom D/T-Typ säurekatalysiert mit Acetanhydrid, gegebenfalls in Abmischung mit einfachen Siloxancyclen und/oder Hydroxygruppen tragenden Siloxanen und/oder Acetoxy- und/oder Alkoxygruppen tragenden Silanen und/oder Siloxanen, zu Acetoxygruppen-tragenden, verzweigten Siloxanen umsetzt und in einem zweiten Schritt die Äquilibrierung der Acetoxygruppen-tragenden, verzweigten Siloxane mit Säuren, vorzugsweise Supersäuren, insbesondere unter Zusatz von Essigsäure durchführt, wobei es sich bei den cyclischen-verzweigten Siloxanen vom D/T-Typ um Mischungen cyclischer-verzweigter Siloxane vom D/T-Typ handelt, die neben D- und T-Einheiten aufweisenden Siloxanen gegebenenfalls auch Siloxane mit Q-Einheiten enthalten, mit der Maßgabe, dass bei diesen Mischungen der Anteil an Si-Atomen stammend aus Q-Einheiten ≤ 10 Massen-% bis ≥ 0 Massen-%, bevorzugt ≤ 5 Massen-% bis ≥ 0 Massen-% bezogen auf die Gesamtheit aller Si-Atome ausmacht.

Es ist ebenfalls bevorzugt, als Acetoxysilikone saure, vorzugsweise supersaure, insbesondere trifluormethansuölfonsaure, endäquilibrierte, Acetoxygruppen-tragende Siloxane einzusetzen, die hergestellt sind, indem man cyclische Siloxane, insbesondere umfassend D₄ und/oder D₅ und/oder Mischungen cyclischer-verzweigter Siloxane vom D/T-Typ gegebenenfalls in Abmischungen mit Hydroxygruppen-tragenden Siloxanen und/oder Acetoxygruppen- und/oder Alkoxygruppen-tragenden Silanen und/oder Siloxanen unter Einsatz von Säure, vorzugsweise Supersäure, insbesondere Trifluormethansulfonsäure als Katalysator mit Acetanhydrid und unter Zusatz von Essigsäure umsetzt, wobei es sich bei den cyclischen-verzweigten Siloxanen vom D/T-Typ um Mischungen cyclischer-verzweigter Siloxane vom D/T-Typ handelt, die neben D- und T-Einheiten aufweisenden Siloxanen gegebenenfalls auch Siloxane mit Q-Einheiten enthalten, mit der Maßgabe, dass bei diesen Mischungen der Anteil an Si-Atomen stammend aus Q-Einheiten ≤ 10 Massen-% bis ≥ 0 Massen-%, bevorzugt ≤ 5 Massen-% bis ≥ 0 Massen-% bezogen auf die Gesamtheit aller Si-Atome ausmacht.

Es ist weiterhin bevorzugt, im erfindungsgemäßen Verfahren zur Herstellung von Silikon(meth)acrylaten als Acetoxysilikone brönstedtsaure, äquilibrierte lineare α,ω-Acetoxysilikone mit mehr als 3 Siliziumatomen einzusetzen, welche Gesamtcyclengehalte, definiert als Summe der Gehaltsanteile der cyclischen Siloxane umfassend D₄, D₅ und D₆ bezogen auf die Siloxanmatrix und gaschromatographisch ermittelt nach deren Derivatisierung zu den entsprechenden linearen α,ω-Isopropoxysiloxanen von kleiner 20, vorzugsweise kleiner 13, besonders bevorzugt kleiner 12 Gewichtsprozent aufweisen.

Es ist weiterhin bevorzugt, im erfindungsgemäßen Verfahren zur Herstellung von Silikon(meth)acrylaten als Acetoxysilkone brönstedtsaure, äquilibrierte verzweigte Acetoxygruppen-tragende Siloxane einzusetzen, die Gesamtcyclengehalte, definiert als Summe der Gehaltsanteile der cyclischen Siloxane umfassend D₄, D₅ und D₆ bezogen auf die Siloxanmatrix und gaschromatographisch ermittelt nach deren Derivatisierung zu den entsprechenden verzweigten Isopropoxysiloxanen von kleiner 20, vorzugsweise kleiner 8, besonders bevorzugt kleiner 7 Gewichtsprozent aufweisen.

Wie bereits oben beschrieben, enthalten die nach den bevorzugten Verfahren hergestellten Acetoxysilikone üblicherweise die als Katalysator eingesetzte Brönstedtsäure bzw. Supersäure bzw. Perfluoralkansulfonsaure bzw. Trifluormethansulfonsaure. Vorzugsweise handelt es sich bei den Acetoxysilikonen daher um brönstedtsaure, bevorzugt supersaure, weiter bevorzugt perfluoralkansulfonsaure, besonders bevorzugt trifluormethansulfonsaure Acetoxysilikone.

Diese brönstedtsauren, bevorzugt supersauren, weiter bevorzugt perfluoralkansulfonsauren, besonders bevorzugt trifluormethansulfonsauren Acetoxysilikone können vorzugsweise direkt mit hydroxyfunktionellen (Meth)acrylsäuren zu Silikon(meth)acrylaten umgesetzt werden.

Eine alternative, ebenfalls bevorzugte Ausführungsform des erfindungsgemäßen Verfahrens zeichnet sich dagegen dadurch aus, dass diese brönstedtsauren, bevorzugt supersauren, weiter bevorzugt perfluoralkansulfonsauren, besonders bevorzugt trifluormethansulfonsauren Acetoxysilikone mit einer Base neutralisiert werden, bevor sie mit hydroxyfunktionellem (Meth)acrylsäuren zu Silikon(meth)acrylaten weiter umgesetzt werden.

Das Acetoxysilikon kann dabei durch eine feste, flüssigen oder gasförmigen Base neutralisiert werden, wobei die Verwendung einer festen Base insbesondere in Form von Carbonaten und/oder Hydrogencarbonaten der Alkali- und/oder der Erdalkalielemente und/oder des Ammoniums oder die Verwendung von flüssigen Basen, hierbei bevorzugt von aliphatischen und/oder aromatischen und/oder alkylaromatischen Aminen oder die Verwendung von Ammoniak als gasförmiger Base bevorzugt sind. Besonders bevorzugt wird insbesondere Natriumhydrogencarbonat und Natriumcarbonat eingesetzt. Vorzugsweise bemisst sich die Menge der zugegebenen festen, flüssigen oder gasförmigen Base an der Menge der im Reaktionsgemisch vorhandenen Säure(n). Bevorzugt beträgt der Massenanteil der Base von 0,5 % bis 5 %, insbesondere von 0,8 % bis 2 % bezogen auf Masse des Reaktionsgemischs ohne Base. Bevorzugt wird die Base in stöchiometrisch Mengen eingesetzt. Zu große Überschüsse an Base sind insbesondere für das im technischen Maßstab durchgeführte, erfindungsgemäße Verfahren unvorteilhaft, da zum Beispiel der damit einhergehende Salzanfall unmittelbar den zu treibenden Filtrationsaufwand bedingt. Ebenfalls störend machen sich große Mengen flüssiger, organischer Basen (Amine) bemerkbar, da diese im Produkt verbleiben.

Es ist weiterhin bevorzugt, dass die Acetoxysilikone kein Chlor enthalten. Solche Acetoxysilikone lassen sich durch die oben aufgeführten, bevorzugten Verfahren zur Herstellung des Acetoxysilikons erhalten.

Vorzugsweise werden als Acetoxysilikone endäquilibrierte Acetoxysilikone eingesetzt. Auch diese lassen sich mittels den oben aufgeführten, bevorzugten Verfahren zur Herstellung des Acetoxysilikons herstellen.

Für die weitere Herstellung der Silikon(meth)acrylate eignen sich besonders lineare oder verzweigte Acetoxysilikone. Als lineare Acetoxysilikone eignen sich bevorzugt α,ω-Acetoxysilikone, also Organosiloxane, die endständig Acetoxygruppen tragen. Die linearen Acetoxysilikone werden bevorzugt aus einfachen Siloxancyclen, die ausschließlich aus D-Einheiten aufgebaut sind, hergestellt. Die verzweigten Acetoxysilikone werden bevorzugt aus cyclischen-verzweigten Siloxanen vom D/T-Typ, die sowohl aus D- als auch aus T-Einheiten bestehen, hergestellt. Die einfachen Siloxancyclen bzw. cyclischen-verzweigten Siloxane vom D/T-Typ können wie oben beschrieben mit Acetanhydrid und vorzugsweise zusätzlich mit Essigsäure in Gegenwart einer die Umsetzung katalysierenden Säure zu Acetoxysilikonen umgesetzt werden.

Das erfindungsgemäß hergestellte Acetoxysilikon wird in der Folge mit mindestens einem hydroxyfunktionellen (Meth)acrylsäureester zu einem Silikon(meth)acrylat umgesetzt.

Es ist bevorzugt, dass der hydroxyfunktionelle (Meth)acrylsäureester eine Verbindung der Formel (II) ist, 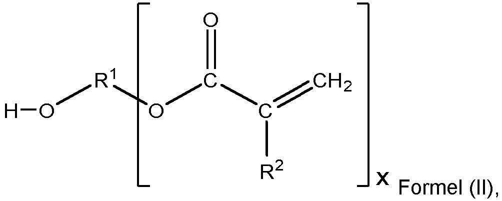 mit
x = mindestens 1, vorzugsweise 1 bis 3, insbesondere 1;
worin
   - R¹: jeweils unabhängig voneinander ausgewählt ist aus der Gruppe bestehend aus (x+1)-bindigen organischen Resten,
   vorzugsweise jeweils unabhängig voneinander ausgewählt ist aus der Gruppe bestehend aus Kohlenwasserstoffresten mit 1 bis 40 Kohlenstoffatomen, die von Sauerstoff- und/oder Stickstoffatomen und/oder NH-Gruppen unterbrochen sein können,
   insbesondere jeweils unabhängig voneinander ausgewählt ist aus der Gruppe bestehend aus zweiwertigen Alkylen- und Polyoxyalkylen-Resten;
   - R²: jeweils unabhängig voneinander ein Wasserstoffrest oder ein Methylrest ist.

Die hydroxyfunktionellen (Meth)acrylatester können beispielsweise primäre und/oder sekundäre und/oder tertiäre OH-Gruppen tragen. Sie können auch in Form von Regioisomerengemischen zum Einsatz gelangen. R¹ kann linear oder verzweigt, gesättigt oder ungesättigt, aromatisch oder aliphatisch, substituiert oder unsubstituiert sein. Bevorzugt ist R¹ ausgewählt aus der Gruppe bestehend aus zweibindigen Resten (x=1), weiter bevorzugt eine Alkylengruppe oder eine Polyoxyalkylengruppe. Besonders bevorzugt ist R¹ eine Ethylengruppe (-CH₂-CH₂-) oder eine Propylengruppe (-CH(CH₃)CH₂- / -CH₂CH(CH₃)-). Weiterhin besonders bevorzugt ist R² ein Wasserstoffrest, das heißt besonders bevorzugt ist also die Verwendung von Acrylatestern.

Geeignete (Meth)acrylatester können beispielsweise ausgewählt werden aus der Gruppe bestehend aus 2-Hydroxyethylacrylat, 2-Hydroxy-1-propylacrylat (1,2-Propandiol-1-acrylat), 1-Hydroxy-2-propylacrylat (1,2-Propandiol-2-acrylat), 1-Hydroxy-3-propylacrylat (1,3-Propandiol-1-acrylat), Pentaerythritoltriacrylat, 2-Hydroxyethylmethacrylat, 2-Hydroxy-1-propylmethacrylat (1,2-Propandiol-1-methacrylat), 1-Hydroxy-2-propylmethacrylat (1,2-Propandiol-2-methacrylat), 1-Hydroxy-3-propylmethacrylat (1,3-Propandiol-1-methacrylat) und Pentaerythritoltrimethacrylat.

Erfindungsgemäß bevorzugt wird das hydroxyfunktionelle (Meth)acrylat in mindestens stöchiometrischer Menge bezogen auf die am Acetoxysilikon gebundenen Acetoxygruppen, weiter bevorzugt in Mengen von 1,03 bis 1,15, insbesondere in Mengen von 1,05 bis 1,10 bezogen auf das Acetoxysilikon eingesetzt. Es ist also bevorzugt, dass das molare Verhältnis der Hydroxygruppen des mindestens einen hydroxyfunktionellen (Meth)acrylsäureesters zu den Acetoxygruppen des mindestens einen Acetoxysilikons mindestens 1,00, vorzugsweise 1,03 bis 1,15, insbesondere 1,05 bis 1,10 beträgt.

Erfindungsgemäß bevorzugt wird die Umsetzung des Acetoxysilikons mit dem hydroxyfunktionellen (Meth)acrylatester in einem Lösungsmittel, weiter bevorzugt in einem aprotischen Lösungsmittel, noch weiter bevorzugt in Ethern, Ketonen, aromatischen Kohlenwasserstoffen und/oder ihren Mischungen, noch weiter bevorzugt in Toluol, Xylol, Tetrahydrofuran, Diethylether, Aceton, Methylisobutylketon und/oder ihren Mischungen durchgeführt. Besonders bevorzugt wird die Umsetzung des Acetoxysilikons mit dem hydroxyfunktionellen (Meth)acrylatester aber ohne Lösungsmittel durchgeführt. Erfindungsgemäß bevorzugt lässt sich die Umsetzung durch Hinzufügen einer festen, flüssigen oder gasförmigen Base vornehmen. Besonders bevorzugt erfolgt die Umsetzung jedoch ohne die Verwendung einer Base.

Vorzugsweise wird die Umsetzung des Acetoxysilikons mit dem einen hydroxyfunktionellen (Meth)acrylatester unter Verwendung eines Katalysators durchgeführt. Als Katalysator für die Kondensationsreaktion werden dabei vorzugsweise Säuren eingesetzt.

Es ist dabei bevorzugt, dass das mindestens eine Acetoxysilikon mit dem mindestens einen hydroxyfunktionellen (Meth)acrylsäureester in Gegenwart eines Katalysators ausgewählt aus der Gruppe bestehend aus
a) Brönstedtsäuren mit einem pKa-Wert von < -3, vorzugsweise Sulfonsäuren oder Halogencarbonsäuren, insbesondere ausgewählt aus der Gruppe bestehend aus Trifluormethansulfonsäure, Methansulfonsäure, para-Toluolsulfonsäure und Trifluoressigsäure;
   und/oder
b) Lewis-Säuren;
   und/oder
c) Metallkatalysatoren, vorzugweise ausgewählt aus der Gruppe bestehend aus Alkyltitanaten (Titanalkoholaten), Metallcarboxylaten und Metall-Acetylacetonatokomplexen, insbesondere ausgewählt aus der Gruppe bestehend aus Titantetrabutanolat, Zinkacetylacetonat und Zinkcarboxylat;
umgesetzt wird.

Zur Vermeidung einer unerwünschten Polymerisation der (Meth)acrylatgruppen während und nach der Umsetzung des Reaktionsgemisches, umfassend den hydroxyfunktionellen (Meth)acrylatester, das Acetoxysilikon und vorzugsweise die die Kondensation katalysierende Säure, wird dem Reaktionsgemisch bevorzugt vor oder während der Umsetzung ein Radikalfänger/Inhibitor zugesetzt. Geeignete Radikalfänger/Inhibitoren sind dem Fachmann hinlänglich bekannt. Als Radikalfänger/Inhibitoren eignen sich beispielsweise hydroxyfunktionelle aromatische Kohlenwasserstoffe, Chinone, heterocyclische Verbindungen mit Stickstoff- und/oder Schwefelgruppen, sowie sterisch gehinderte Amine. Bevorzugt wird der Radikalfänger/Inhibitor ausgewählt aus der Gruppe bestehend aus Methylhydrochinon, para-Methoxyphenol und Phenothiazin. Besonders bevorzugt wird Methylhydrochinon eingesetzt. Es ist weiterhin bevorzugt, dass der Massenanteil der Radikalfänger/Inhibitoren von 0,05 % bis 1,0 %, vorzugsweise von 0,1 bis 0,5 %, insbesondere von 0,2 % bis 0,4 % bezogen auf die Masse des Reaktionsgemisches beträgt.

Es ist erfindungsgemäß bevorzugt, dass die Umsetzung des mindestens einen Acetoxysilikons mit dem mindestens einen hydroxyfunktionellen (Meth)acrylsäureester bei einer Temperatur von 40°C bis 150°C, besonders bevorzugt von 70°C bis 120°C, über einen Zeitraum von einer bis 8 Stunden, besonders bevorzugt über einen Zeitraum von 3 bis 6 Stunden, durchgeführt wird. Vorzugsweise wird die Umsetzung bei Drücken von 1 mbar bis 1013 mbar durchgeführt.

Das erhaltene Umsetzungsprodukt kann flüchtige Reaktions- und/oder Nebenprodukte enthalten. Es ist vorteilhaft, diese weitgehend zu entfernen. Es ist daher bevorzugt, das Umsetzungsprodukt 1 bis 8 Stunden, bevorzugt 1 bis 4 Stunden, bei einer Temperatur von 80°C bis 140°C, bevorzugt von 100°C bis 130°C unter Anlegen eines Hilfsvakuums von weniger als 200 mbar, bevorzugt von weniger als 20 mbar, insbesondere von weniger als 4 mbar von flüchtigen Bestandteilen, beispielsweise flüchtigen Reaktions- und/oder Nebenprodukten, zu befreien. Unter der Terminologie "Umsetzungsprodukt von flüchtigen Bestandteilen befreien", wird hier verstanden, den Anteil der flüchtigen Bestandteile im Umsetzungsprodukt zu verringern.

Das Umsetzungsprodukt kann nach der Befreiung von flüchtigen Bestandteilen gegebenenfalls Säure enthalten. Es ist daher bevorzugt, dass die im Umsetzungsprodukt gegebenenfalls enthaltenen Säuren bei einer Temperatur von 20°C bis 110°C, bevorzugt von 40°C bis 80°C, durch Hinzufügen einer festen, flüssigen oder gasförmigen Base neutralisiert werden, wobei die Verwendung einer festen Base insbesondere in Form von Carbonaten und/oder Hydrogencarbonaten der Alkali- und/oder der Erdalkalielemente und/oder des Ammoniums oder die Verwendung von flüssigen Basen, hierbei bevorzugt von aliphatischen und/oder aromatischen und/oder alkylaromatischen Aminen oder die Verwendung von Ammoniak als gasförmiger Base bevorzugt sind. Besonders bevorzugt wird insbesondere Natriumhydrogencarbonat und Natriumcarbonat eingesetzt. Vorzugsweise bemisst sich die Menge der zugegebenen festen, flüssigen oder gasförmigen Base an der Menge der im Reaktionsgemisch vorhandenen Säure(n). Bevorzugt beträgt der Massenanteil der Base von 0,5 % bis 5 %, insbesondere von 0,8 % bis 2 % bezogen auf Masse der Reaktionsgemischs ohne Base. Bevorzugt wird die Base in stöchiometrischen Mengen eingesetzt. Zu große Überschüsse an Base sind insbesondere für das im technischen Maßstab durchgeführte, erfindungsgemäße Verfahren unvorteilhaft, da zum Beispiel der damit einhergehende Salzanfall unmittelbar den zu treibenden Filtrationsaufwand bedingt. Ebenfalls störend machen sich große Mengen flüssiger, organischer Basen (Amine) bemerkbar, da diese im Produkt verbleiben. Um das Umsetzungsprodukt zu reinigen, kann gegebenenfalls eine Filtration durchgeführt werden. Als Filterhilfsmittel können dabei beispielsweise Cellulose, Kieselgel, Kieselgur oder Perlit eingesetzt werden. Der Anteil an unerwünschten Substanzen oder Verunreinigungen im Umsetzungsprodukt kann zudem mittels Aktivkohle und/oder Bleicherden, wie beispielsweise Tonsil^{®}, verringert werden.

Ein weiter Gegenstand der Erfindung ist daher auch ein Produkt (auch als Verfahrensprodukt oder Umsetzungsprodukt bezeichnet), das nach dem erfindungsgemäßen Verfahren herstellbar ist.

Noch ein weiter Gegenstand der Erfindung ist ein Silikon(meth)acrylat, das nach dem erfindungsgemäßen Verfahren herstellbar ist.

Das erfindungsgemäße Produkt enthält oder besteht (im Wesentlichen) aus mindestens einem erfindungsgemäßen Silikon(meth)acrylat.

Diese nach dem erfindungsgemäßen Verfahren erhaltenen Produkte beziehungsweise Silikon(meth)acrylate, zeichnen sich insbesondere dadurch aus, dass sie frei oder im Wesentlichen frei von Schwermetallen (beispielsweise in Form von Schwermetallionen oder Schwermetallverbindungen), Bor (beispielsweise in Form von Borverbindungen) und/oder Chlor (beispielsweise in Form von Chloriden oder Chlorverbindungen) sind. Der Massenanteil an Schwermetallen, Bor und/oder Chlor bezogen auf die Masse des Verfahrensprodukts bzw. des mindestens einen Silikon(meth)acrylats beträgt vorzugsweise ≤ 0,5 %, insbesondere ≤ 0,01 %. Unter Schwermetallen werden vorzugsweise solche Metalle verstanden, deren Dichte unter Normalbedingungen größer als 5,0 g/cm³ ist.

Es ist weiterhin bevorzugt, dass der Gehalt an cyclischen Siloxanen in den nach dem erfindungsgemäßen Verfahren erhaltenen Silikon(meth)acrylaten gering ist. Es ist daher bevorzugt, dass der gaschromatographisch bestimmte Gesamtcylcengehalt im Verfahrensprodukt, definiert als Summe der D₄-, D₅- und D₆-Massenanteile bezogen auf die Masse des Verfahrensprodukts bzw. Silikon(meth)acrylats, ≤ 0,1 %, insbesondere ≤ 0,05 % beträgt.

Bevorzugt handelt es sich bei den erfindungsgemäßen Silikon(meth)acrylaten um Verbindungen der Formel (III),

Mₘ₁M^{Acr}ₘ₂D_{d1}D^{Acr}_{d2}TₜQ_{q} Formel (III),

mit
M = [R₃SiO_{1/2}];
M^{Acr} = [RR^{Acr}Sio_{1/2}];
D = [R₂SiO_{2/2}];
D^{Acr} = [RR^{Acr}SiO_{2/2}];
T = [RSiO_{3/2}];
Q = [SiO_{4/2}];
m1 = 0 bis 32, vorzugsweise 0 bis 22, insbesondere 0;
m2 = 0 bis 32, vorzugsweise 1 bis 10, insbesondere 2;
d1 = 1 bis 1000, vorzugsweise 5 bis 500, insbesondere 10 bis 400;
d2 = 0;
t = 1 bis 5:
q = 0 bis 10, vorzugsweise 0 bis 5, insbesondere 1 bis 5;
mit der Maßgabe, dass gilt:
   m1+m2 = mindestens 2, vorzugsweise 2 bis 20, insbesondere 3 bis 10;
   m2+d2 = mindestens 1, vorzugsweise 2 bis 10, insbesondere 2 bis 6;
   worin
      - R: jeweils unabhängig voneinander ausgewählt ist aus der Gruppe bestehend aus einbindigen organischen Resten,
      vorzugsweise jeweils unabhängig voneinander ausgewählt ist aus der Gruppe bestehend aus einbindigen Kohlenwasserstoffresten mit 1 bis 30 Kohlenstoffatomen,
      insbesondere Methyl ist;
      - R^{Acr}: jeweils unabhängig voneinander ausgewählt ist aus einbindigen Resten der Formel (IV), 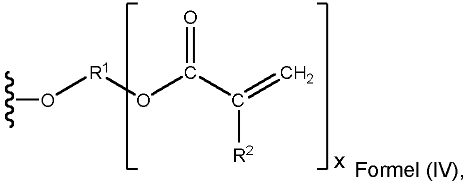
      mit
      x = mindestens 1, vorzugsweise 1 bis 3, insbesondere 1;
      worin
         - R¹: jeweils unabhängig voneinander ausgewählt ist aus der Gruppe bestehend aus (x+1)-bindigen organischen Resten,
         vorzugsweise jeweils unabhängig voneinander ausgewählt ist aus der Gruppe bestehend aus Kohlenwasserstoffresten mit 1 bis 40 Kohlenstoffatomen, die von Sauerstoff- und/oder Stickstoffatomen und/oder NH-Gruppen unterbrochen sein können,
         insbesondere jeweils unabhängig voneinander ausgewählt ist aus der Gruppe bestehend aus zweiwertigen Alkylen- und Polyoxyalkylen-Resten;
         - R²: jeweils unabhängig voneinander ein Wasserstoffrest oder ein Methylrest ist.

Es ist also bevorzugt, dass das Verfahrensprodukt mindestens ein Silikon(meth)acrylat der Formel (III) enthält oder (im Wesentlichen) daraus besteht.

Es ist weiterhin bevorzugt, dass das Verfahrensprodukt bzw. Silikon(meth)acrylat nicht cyclisch ist. Es ist daher bevorzugt, dass für das Silikon(meth)acrylat der Formel (III) gilt: m1+m2 = 2+t+2*q.

Der einbindige organische Rest R des Silikon(meth)acrylats der Formel (III) ist dabei von R^{Acr} unterschiedlich. Es ist weiterhin bevorzugt, dass der einbindige organische Rest R des Silikon(meth)acrylats der Formel (III) jeweils unabhängig ausgewählt ist aus der Gruppe bestehend aus linearen oder verzweigte, gesättigten oder ungesättigten, aromatischen oder aliphatischen, substituierten oder unsubstituierten Kohlenwasserstoffresten. Weiter bevorzugt ist der einbindige organische Rest R des Silikon(meth)acrylats der Formel (III) jeweils unabhängig ausgewählt aus gesättigten Kohlenwasserstoffresten mit 1 bis 30 Kohlenstoffatomen oder aromatischen Kohlenwasserstoffresten mit 6 bis 30 Kohlenstoffatomen, noch weiter bevorzugt aus gesättigten Kohlenwasserstoffresten mit 1 bis 14 Kohlenstoffatomen oder monocyclischen aromatischen Kohlenwasserstoffresten. Noch weiter bevorzugt ist der einbindige organische Rest R des Silikon(meth)acrylats der Formel (III) jeweils unabhängig ausgewählt aus der Gruppe bestehend aus Methyl, Ethyl, Propyl und Phenyl. Insbesondere ist R = Methyl.

Die Reste R^{Acr} sind von hydroxyfunktionellen (Meth)acrylatestern abgeleitet, die primäre und/oder sekundäre und/oder tertiäre OH-Gruppen tragen. Die Reste R^{Acr} können also beispielsweise von Regioisomerengemischen abgeleitet sein. R¹ kann linear oder verzweigt, gesättigt oder ungesättigt, aromatisch oder aliphatisch, substituiert oder unsubstituiert sein. Bevorzugt ist R¹ ausgewählt aus der Gruppe bestehend aus zweibindigen Resten (x=1), weiter bevorzugt eine Alkylengruppe oder eine Polyoxyalkylenguppe. Besonders bevorzugt ist R¹ eine Ethylengruppe (-CH₂-CH₂-) oder eine Propylengruppe (-CH(CH₃)CH₂- / -CH₂CH(CH₃)-). Weiterhin besonders bevorzugt ist R² ein Wasserstoffrest, das heißt besonders bevorzugt ist R^{Acr} von hydroxyfunktionellen Acrylatestern abgeleitet. Geeignete (Meth)acrylatester, von denen die Reste R^{Acr} abgeleitet sein können, sind bereits oben aufgeführt.

Weiterhin besonders bevorzugt ist R² ein Wasserstoffrest. Es sind also solche Reste R^{Acr} besonders bevorzugt, die eine oder mehrere Acrylatestergruppen tragen.

Das erfindungsgemäße Verfahrensprodukt bzw. das erfindungsgemäße Silikon(meth)acrylat eignet sich insbesondere als Komponente in härtenden Zusammensetzungen.

Ein weiterer Gegenstand der vorliegenden Erfindung ist daher eine Zusammensetzung enthaltend das erfindungsgemäße Verfahrensprodukt bzw. das erfindungsgemäße Silikon (meth)acrylat.

Es ist bevorzugt, dass diese erfindungsgemäße Zusammensetzung härtbar, vorzugsweise mittels Radikalreaktion härtbar ist, wobei die Radikalreaktion thermisch oder durch UV-Strahlen oder Elektronenstrahlen initiiert werden kann.

Es ist weiterhin bevorzugt, die erfindungsgemäße Zusammensetzung als Beschichtungsmasse einzusetzen. Durch Aushärtung der Beschichtungsmasse können Trennbeschichtungen erhalten werden.

Es ist außerdem bevorzugt, die erfindungsgemäße Zusammensetzung im 3D-Druckverfahren einzusetzen. Die erfindungsgemäße Zusammensetzung kann dabei als Ausgangsmaterial für die zu erstellenden 3D-Drucke (3D-Objekte) verwendete werden. Die 3D-Drucke sind also durch Aushärtung des Ausgangsmaterials erhältlich.

Die erfindungsgemäßen Zusammensetzungen können dreidimensional durch freie Radikale vernetzt werden und härten thermisch unter Zusatz von z. B. Peroxiden oder unter Einfluss energiereicher Strahlung, wie UV- oder Elektronenstrahlung, innerhalb kürzester Zeit zu mechanisch und chemisch widerstandsfähigen Schichten aus, die bei geeigneter Formulierung der erfindungsgemäßen Zusammensetzungen vorbestimmbare abhäsive Eigenschaften wie auch Haftungseigenschaften aufweisen.

Wird als Strahlung UV-Strahlung verwendet, erfolgt die Vernetzung/Härtung vorzugsweise in Anwesenheit von Photoinitiatoren und/oder Photosensibilisatoren. Bevorzugt sind Photoinitiatoren vom Norrish-Typ 1, wie beispielsweise Benzophenon, Benzoin, α-Hydroxyalkylphenon, Acylphosphinoxid oder ihre Derivate. Übliche Photoinitiatoren werden beispielsweise beschrieben in "A Compilation of Photoinitiators Commercially available for UV today" (K. Dietliker, SITA Technology Ltd, London 2002). Bevorzugte erfindungsgemäße Zusammensetzungen weisen Photoinitiatoren und/oder Photosensibilisatoren in einem Massenanteil von 0,01% bis 10%, insbesondere von 0,1% bis 5% auf, bezogen auf die Masse der gesamten Zusammensetzung. Die Photoinitiatoren und/oder Photosensibilisatoren sind bevorzugt in den erfindungsgemäßen Zusammensetzungen löslich, mehr bevorzugt löslich in einem Massenanteil von 0,01% bis 10%, insbesondere von 0,1% bis 5% bezogen auf die Masse der gesamten Zusammensetzung.

Eine bevorzugte Zusammensetzung enthält neben dem erfindungsgemäßen Silikon(meth)acrylat zusätzlich davon unterschiedliche Komponenten ausgewählt aus der Gruppe bestehend aus rein organischen phosphorhaltigen oder phosphorfreien Verbindungen, mit mindestens einer ethylenisch ungesättigten, radikalisch polymerisierbare Gruppe (z.B. organische monomere oder polymere (Meth)acrylatester), weiteren organomodifizierten Silikonen (z.B. Silikon(meth)acrylate des SiC-Typs), Silanen, Photoinitiatoren, Photosensibilisatoren, thermischen Radikalstartern (z.B. Peroxide), Füllstoffen (z.B. hydrophobierten Kieselsäuren oder Metalloxiden), MQ-Harzen, Pigmenten, Lösemitteln, Härtungsbeschleunigern, Anti-Misting-Additiven, Amin-Synergisten und Stabilisatoren (z.B. Phosphite oder hindered amine light stabilizers (HALS)), Antioxidationsmitteln und Sauerstofffängern.

Bevorzugt umfasst das Verfahren zur Herstellung einer Trennbeschichtung bzw. eines 3D-Drucks die folgenden mittelbar oder unmittelbar aufeinanderfolgenden Schritte:
a. Auftragen der Zusammensetzung auf eine Oberfläche;
b. Aushärten der Zusammensetzung, vorzugsweise durch Bestrahlen mit UV-Strahlung.

Bei der Herstellung eines 3D-Drucks mittels eines 3D-Druckverfahrens werden dabei die Verfahrensschritte a und b vorzugsweise mehrfach in alternierender Abfolge durchgeführt. Die 3D-Drucke werden also schichtweise aufgebaut.

Geeignete UV-Strahlenquellen zur Aushärtung der erfindungsgemäßen Zusammensetzungen sind Mitteldruckquecksilberdampflampen, gegebenenfalls dotiert oder Niederdruckquecksilberdampflampen, UV-LED-Lampen oder sogenannte Excimerstrahler. Die UV-Strahler können polychromatisch oder monochromatisch sein. Bevorzugt liegt der Emissionsbereich des Strahlers im Absorptionsbereich der Photoinitiatoren und/oder Photosensibilisatoren.

Bei der Herstellung der Trennbeschichtung ist es bevorzugt, dass es sich bei der Oberfläche um eine Oberfläche eines Trägers, vorzugsweise eines flächigen Trägers handelt. Die erfindungsgemäße Zusammensetzung kann dabei einseitig oder beidseitig auf den flächigen Träger aufgetragen werden. Vorzugsweise wird der flächige Träger ausgewählt aus der Gruppe bestehend aus Papier, Gewebe, Metallfolien und Kunststofffolien. Der Träger kann glatt oder auch mit oberflächlichen Strukturen versehen sein. Besonders bevorzugte Träger sind Polypropylen- und Polyethylen-Folien.

Die Trennbeschichtungen finden beispielsweise Anwendung in Klebebändern, Etiketten, Verpackungen für selbstklebende Hygieneprodukte, Lebensmittelverpackungen, selbstklebenden Thermopapieren oder Abdeckbahnen für Bitumendachbahnen. Die Trennbeschichtungen weisen eine gute Trennwirkung gegen die in diesen Anwendungen zur Anwendung kommenden klebenden Massen auf.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt gelesen werden kann.

### Beispiele

Die folgenden Beispiele dienen dem Fachmann allein zur Erläuterung dieser Erfindung und stellen keinerlei Beschränkung des beanspruchten Gegenstandes dar. Die ¹H-NMR und die ²⁹Si-NMR-Spektroskopie dienten in allen Beispielen der Reaktionsverfolgung.

### Allgemeine Methoden

### Kenrspinresonanzspektroskopie (NMR-Spektroskopie):

Die ¹H-NMR-Proben werden im Rahmen dieser Erfindung bei einer Messfrequenz von 400 MHz in einem Bruker 400 Spektrometer, das mit einem BBI Probenkopf ausgestattet ist, bei 22°C gelöst in CDCl₃ und gegen Tetramethylsilan (TMS) als externem Standard [δ(¹H) = 0,0 ppm] gemessen.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard [δ(²⁹Si) = 0,0 ppm] gemessen.

### Gaschromatographie (GC):

Die Gaschromatogramme werden an einem GC-Gerät des Typs GC 7890B der Fa. Agilent Technologies ausgestattet mit einer Säule vom Typ HP-1; 30m x 0,32mm ID x 0,25µm dF (Agilent Technologies Nr. 19091Z-413E) und Wasserstoff als Trägergas mit folgenden Parametern aufgenommen:
Detektor: FID; 310°C
Injektor: Split; 290°C
Mode: constant flow 2 mL/min
Temperaturprogramm: 60°C mit 8°C/min -150°C mit 40°C/min - 300°C 10 min.

### Synthesebeispiele

Referenzsynthesebeispiel *1 (S1)*
a) Herstellung eines linearen α,ω-Diacetoxypolydimethylsiloxans der mittleren Kettenlänge N = 14:
   In einem 2L-Vierhalskolben mit KPG-Rührer, Rückflusskühler und Innenthermometer werden 1349,6 g Decamethylcyclopentasiloxan, 157,2 g Essigsäureanhydrid, 22,6 g Essigsäure und 3,01 g Trifluormethansulfonsäure unter Rühren auf 150°C aufgeheizt. Nach 6 Stunden Rühren bei 150°C wird auf 60°C abgekühlt. Anschließend werden 30,1 g wasserfreies Natriumcarbonat hinzugegeben. Der Ansatz wird für eine weitere Stunde gerührt und dann filtriert. Als Filtrat erhält man ein farbloses, klares Acetoxysilikon der gemäß ²⁹Si-NMR ermittelten mittleren Zusammensetzung M^{AcO}₂D₁₂.
b) Herstellung eines α,ω-Silikonacrylats der mittleren Formel M^{Acr}₂D₁₂ mit R¹ = Propylen und R²= H:
   In einem 500-ml-Vierhalskolben mit KPG-Rührer, Rückflusskühler und Innenthermometer werden 54,66 g Hydroxypropylacrylat (95% Reinheit, Sigma Aldrich, Regioisomerengemisch enthaltend 25% des Isomers mit primärer Hydroxygruppe (1-Hydroxy-2-propylacrylat) und 75% des Isomers mit sekundärer Hydroxygruppe (2-Hydroxy-1-propylacrylat)) mit 0,11 g Methylhydrochinon, 0,56 g Trichloressigsäure (Sigma Aldrich) und 1,41 g Essigsäure (p. a., Baker) vorgelegt und gerührt. Das eingesetzte Hydroxypropylacrylat wird dabei ohne weitere Vortrocknung eingesetzt. 226,57 g des in Synthesebeispiel 1 a) gewonnenen, linearen α,ω-Diacetoxypolydimethylsiloxans der mittleren Kettenlänge N = 14 und der mittleren Formel M^{AcO}₂D₁₂ werden zügig bei Raumtemperatur zudosiert und die Reaktionsmischung wird auf 110°C aufgeheizt. Beim Aufheizen wird das Reaktionsgemisch klar und einphasig. Nach 4 Stunden Rühren bei 110°C wird das Reaktionsgemisch am Rotationsverdampfer bei 100°C für eine Stunde bei einem angelegten Hilfsvakuum von 4 mbar erhitzt, um flüchtige Reaktionsprodukte und/oder Nebenprodukte destillativ zu entfernen. Im Vierhalskolben wird der auf 80°C abgekühlte Destillationssumpf mit 5,6 g wasserfreiem Natriumcarbonat versetzt und für 2 Stunden bei 80°C gerührt. Nach Abkühlen wird der Feststoff über einen Faltenfilter abfiltriert und man erhält ein klares, farbloses, flüssiges Produkt. Das ²⁹Si-NMR-Spektrum des Produkts zeigt, dass die Signale der Si-gebundenen Acetoxygruppen nicht mehr vorhanden sind und dass an deren Stelle die Signale des SiOC-gebundenen Hydroxypropylacrylats getreten sind. Die aus dem ²⁹Si-NMR-Spektrum berechnete, mittlere Kettenlänge liegt bei N = 14. Die aus dem ²⁹Si-NMR-Spektrum berechnete, gemittelte Struktur entspricht somit der angenäherten Formel: M^{Acr}₂D₁₂ mit R¹ = Propylen (-CH(CH₃)CH₂- / -CH₂CH(CH₃)-) und R²= H.

Referenzsynthesebeispiel *2 (S2)*
a) Herstellung eines linearen α,ω-Diacetoxypolydimethylsiloxans der mittleren Kettenlänge N = 39
   In einem 2L-Vierhalskolben mit KPG-Rührer, Rückflusskühler und Innenthermometer werden 1390,3 g Decamethylcyclopentasiloxan, 70,2 g Essigsäureanhydrid, 21,9 g Essigsäure und 2,96 g Trifluormethansulfonsäure unter Rühren auf 150°C erhitzt. Nach 6 Stunden Rühren bei 150°C wird auf 60°C abgekühlt. Anschließend werden 29,7 g wasserfreies Natriumcarbonat hinzugegeben. Der Ansatz wird für eine weitere Stunde gerührt und dann filtriert. Als Filtrat erhält man ein farbloses, klares Acetoxysilikon, der gemäß ²⁹Si-NMR ermittelten mittleren Zusammensetzung M^{OAc}₂D₃₇.
b) Herstellung eines α,ω-Silikonacrylats der mittleren Formel M^{Acr}₂D₃₇ mit R¹ = Propylen und R² = H:
   In einem 500-ml-Vierhalskolben mit KPG-Rührer, Rückflusskühler und Innenthermometer werden 27,33 g Hydroxypropylacrylat (95% Reinheit, Sigma Aldrich, Regioisomerengemisch mit 25% des Isomers mit primärer Hydroxygruppe (1-Hydroxy-2-propylacrylat) und 75% des Isomers mit sekundärer Hydroxygruppe (2-Hydroxy-1-propylacrylat)) mit 0,13 g Methylhydrochinon, 0,65 g Trichloressigsäure (Sigma Aldrich) und 1,63 g Essigsäure (p. a., Baker) vorgelegt und gerührt. Das eingesetzte Hydroxypropylacrylat wird dabei ohne weitere Vortrocknung eingesetzt. 297,93 g des in Synthesebeispiel 2 a) gewonnenen, linearen α,ω-Diacetoxypolydimethylsiloxans der mittleren Kettenlänge N = 39 und der mittleren Formel M^{AcO}₂D₃₇ werden zügig bei Raumtemperatur zudosiert und die Reaktionsmischung auf 110°C aufgeheizt. Beim Aufheizen wird das Reaktionsgemisch klar und einphasig. Nach 4 Stunden Rühren bei 110°C wird das Reaktionsgemisch am Rotationsverdampfer bei 100°C für eine Stunde bei einem angelegten Hilfsvakuum von 4 mbar erhitzt, um flüchtige Reaktionsprodukte und Nebenprodukte destillativ zu entfernen. Im Vierhalskolben wird der Destillationssumpf mit 6,5 g wasserfreiem Natriumcarbonat versetzt und 2 Stunden bei 80°C gerührt. Nach Abkühlen wird der Feststoff über einen Faltenfilter abgetrennt und man erhält als Filtrat ein farblos-klares, flüssiges Produkt. Das ²⁹Si-NMR des Produkts zeigt, dass die Signale der Si-gebundenen Acetoxygruppen nicht mehr vorhanden sind und dass an deren Stelle die Signale des SiOC-gebundenen Hydroxypropylacrylats getreten sind. Ausgehend von der mittleren Formel M^{OAc}₂D₃₇ für das eingesetzte α,ω-Diacetoxypolydimethylsiloxans folgt demnach ein α,ω-Silikonacrylat der mittleren Formel: M^{Acr}₂D₃₇ mit R¹ = Propylen (-CH(CH₃)CH₂- / -CH₂CH(CH₃)-) und R² = H.

### Synthesebeispiel 3 (S3)

### a) Herstellung eines verzweigten Acetoxysilikons der mittleren Formel M^{AcO}_{3,5}D₂₂T₂

In einem 1L-Vierhalskolben mit KPG-Rührer, Rückflusskühler und Innenthermometer werden 329,91 g eines cyclisch verzweigten DT-Siloxans der angenäherten Formel D_{5,45}T, 381,52 g Decamethylcyclopentasiloxan, 78,61 g Essigsäureanhydrid, 11,85 g Essigsäure und 1,58 g Trifluormethansulfonsäure unter Rühren auf 150°C erhitzt. Nach 6 Stunden Rühren bei 150°C wird auf 60°C abgekühlt. Anschließend werden 15,8 g wasserfreien Natriumcarbonats hinzugegeben. Der Ansatz wird für eine weitere Stunde gerührt und dann filtriert. Als Filtrat erhält man ein farbloses, klares Acetoxysilikon, dem man gemäß ²⁹Si-NMR eine mittlere Zusammensetzung von M^{AcO}_{3,5}D₂₂T₂ zuschreiben kann.

### b) Herstellung eines Silikonacrylats der mittleren Formel M^{Acr}_{2,5}D_{18,7}T₂ mit R¹ = Propylen und R² = H:

In einem 500-ml-Vierhalskolben mit KPG-Rührer, Rückflusskühler und Innenthermometer werden 54,66 g Hydroxypropylacrylat (95% Reinheit, Sigma Aldrich, Regioisomerengemisch mit 25% des Isomers mit primärer Hydroxygruppe (1-Hydroxy-2-propylacrylat) und 75% des Isomers mit sekundärer Hydroxygruppe (2-Hydroxy-1-propylacrylat)) mit 0,12 g Methylhydrochinon, 0,62 g Trichloressigsäure (Sigma Aldrich) und 1,55 g Essigsäure (p. a., Baker) vorgelegt und gerührt. Das eingesetzte Hydroxypropylacrylat wurde dabei ohne weitere Vortrocknung eingesetzt. 255,73 g des in Synthesebeispiel 3 a) gewonnenen, verzweigten, endständig Acetoxysilikon der mittleren Formel M^{AcO}_{3,5}D₂₂T₂ werden zügig bei Raumtemperatur zudosiert und die Reaktionsmischung wird auf 110°C aufgeheizt. Beim Aufheizen wird das Reaktionsgemisch klar und einphasig. Nach 4 Stunden Rühren bei 110°C wird das Reaktionsgemisch in einen Rotationsverdampfer überführt und eine Stunde lang bei 100°C und einem angelegten Hilfsvakuum von 4 mbar von flüchtigen Reaktionsprodukten und/oder Nebenprodukten destillativ befreit. Darauf und noch am Rotationsverdampfer hängend, wird der Destillationssumpf mit 6,2 g wasserfreiem Natriumcarbonat beaufschlagt und man setzt die Destillation für 2 Stunden bei 80°C fort. Nach Abkühlen wird der Feststoff über einen Faltenfilter abfiltriert und man erhält ein farbloses, klares, flüssiges Produkt. Das ²⁹Si-NMR-Spektrum des Produkts zeigt, dass die Signale der Si-gebundenen Acetoxygruppen nicht mehr vorhanden sind und dass an deren Stelle die Signale des SiOC-gebundenen Hydroxypropylacrylats getreten sind. Die aus dem ²⁹Si-NMR-Spektrum berechnete, gemittelte Struktur entspricht der Formel: M^{Acr}_{2,5}D_{18,7}T₂ mit R¹ = Propylen (-CH(CH₃)CH₂- / -CH₂CH(CH₃)-) und R²= H.

### Synthesebeispiel 4 (S4)

### a) Herstellung eines verzweigten Acetoxysilikons der mittleren Formel M^{AcO}_{5,1}D_{54,5}T₃

In einem 1L-Vierhalskolben mit KPG-Rührer, Rückflusskühler und Innenthermometer werden 58,84 g Methyltriethoxysilan, 465,95 g Decamethylcyclopentasiloxan und 1,21 g Trifluormethansulfonsäure vorgelegt und eine Mischung aus 81,42 g Essigsäureanhydrid, 18,19 g Essigsäure zudosiert. Es wird stufenweise unter Rühren bis auf 150°C erhitzt und entstehendes Destillat aufgefangen. Nach 5 Stunden Rühren bei 150°C wird auf 60°C abgekühlt. Anschließend werden 3,03 g wasserfreien Natriumcarbonats hinzugegeben. Der Ansatz wird für eine weitere Stunde gerührt und dann filtriert. Als Filtrat erhält man ein farbloses, klares Acetoxysilikon, dem man gemäß ²⁹Si-NMR eine mittlere Zusammensetzung von M^{AcO}_{5,1}D_{54,5}T₃ zuschreiben kann.

### b) Herstellung eines Silikonacrylats der mittleren Formel M^{Acr}_{3,89}D_{50,3}T₃ mit R¹ = Propylen und R² = H:

In einem 500-ml-Vierhalskolben mit KPG-Rührer, Rückflusskühler und Innenthermometer werden 42,01 g Hydroxypropylacrylat (95% Reinheit, Sigma Aldrich, Regioisomerengemisch mit 25% des Isomers mit primärer Hydroxygruppe (1-Hydroxy-2-propylacrylat) und 75% des Isomers mit sekundärer Hydroxygruppe (2-Hydroxy-1-propylacrylat)) mit 0,12 g Methylhydrochinon, 0,62 g Trichloressigsäure (Sigma Aldrich) und 1,54 g Essigsäure (p. a., Baker) vorgelegt und gerührt. Das eingesetzte Hydroxypropylacrylat wurde dabei ohne weitere Vortrocknung eingesetzt. 266,43 g des in Synthesebeispiel 4 a) gewonnenen, verzweigten, endständig Acetoxysilikon der mittleren Formel M^{AcO}_{5,1}D_{54,5}T₃ werden zügig bei Raumtemperatur zudosiert und die Reaktionsmischung wird auf 110°C aufgeheizt. Beim Aufheizen wird das Reaktionsgemisch klar und einphasig. Nach 4 Stunden Rühren bei 110°C wird das Reaktionsgemisch in einen Rotationsverdampfer überführt und eine Stunde lang bei 100°C und einem angelegten Hilfsvakuum von 4 mbar von flüchtigen Reaktionsprodukten und/oder Nebenprodukten destillativ befreit. Darauf wird der Destillationssumpf mit 6,2 g wasserfreiem Natriumcarbonat beaufschlagt und 2 Stunden bei 80°C gerührt. Nach Abkühlen wird der Feststoff über einen Faltenfilter abfiltriert und man erhält ein farbloses, klares, flüssiges Produkt. Die aus dem ²⁹Si-NMR-Spektrum berechnete, gemittelte Struktur entspricht der Formel: M^{Acr}_{3,89}D_{50,3}T₃ mit R¹ = Propylen (-CH(CH₃)CH₂- / -CH₂CH(CH₃)-) und R²= H.

### Synthesebeispiel 5 (S5)

### a) Herstellung eines verzweigten Acetoxysilikons der mittleren Formel M^{AcO}_{3,63}D_{55,8}T₂

In einem 1L-Vierhalskolben mit KPG-Rührer, Rückflusskühler und Innenthermometer werden 42,79 g Methyltriethoxysilan, 516,11 g Decamethylcyclopentasiloxan und 1,25 g Trifluormethansulfonsäure vorgelegt und eine Mischung aus 63,70 g Essigsäureanhydrid und 18,68 g Essigsäure zudosiert. Es wird stufenweise unter Rühren bis auf 150°C erhitzt und entstehendes Destillat aufgefangen. Nach 5h Stunden Rühren bei 150°C wird auf 60°C abgekühlt. Anschließend werden 4,4 g wasserfreien Natriumcarbonats hinzugegeben. Der Ansatz wird für eine weitere Stunde gerührt und dann filtriert. Als Filtrat erhält man ein farbloses, klares Acetoxysilikon, dem man gemäß ²⁹Si-NMR eine mittlere Zusammensetzung von M^{AcO}_{3,63}D_{55,8}T₂ zuschreiben kann.

### b) Herstellung eines Silikonacrylats der mittleren Formel M^{Acr}_{3,03}D_{55,09}T₂ mit R¹= Propylen und R² = H:

In einem 500-ml-Vierhalskolben mit KPG-Rührer, Rückflusskühler und Innenthermometer werden 29,18 g Hydroxypropylacrylat (95% Reinheit, Sigma Aldrich, Regioisomerengemisch mit 25% des Isomers mit primärer Hydroxygruppe (1-Hydroxy-2-propylacrylat) und 75% des Isomers mit sekundärer Hydroxygruppe (2-Hydroxy-1-propylacrylat)) mit 0,113 g Methylhydrochinon, 0,57 g Trichloressigsäure (Sigma Aldrich) und 1,41 g Essigsäure (p. a., Baker) vorgelegt und gerührt. Das eingesetzte Hydroxypropylacrylat wurde dabei ohne weitere Vortrocknung eingesetzt.

253,79 g des in Synthesebeispiel 5 a) gewonnenen, verzweigten, endständig Acetoxysilikon der mittleren Formel M^{AcO}_{3,63}D_{55,8}T₂ werden zügig bei Raumtemperatur zudosiert und die Reaktionsmischung wird auf 110°C aufgeheizt. Beim Aufheizen wird das Reaktionsgemisch klar und einphasig. Nach 4 Stunden Rühren bei 110°C wird das Reaktionsgemisch in einen Rotationsverdampfer überführt und bei anfänglich 110°C und einem angelegten Hilfsvakuum bis 2 mbar von flüchtigen Reaktionsprodukten und/oder Nebenprodukten destillativ befreit. Nach Destillationsbeginn wird die Temperatur langsam auf 130°C erhöht und noch 3h bei 130°C und 2 mbar destilliert. Darauf wird der Destillationssumpf mit 2,4 g wasserfreiem Natriumcarbonat und 0,02 g Dimethylhexadecylamin beaufschlagt und 2 Stunden bei 80°C gerührt. Nach Abkühlen wird der Feststoff über einen Faltenfilter abfiltriert. Die aus dem ²⁹Si-NMR-Spektrum berechnete, gemittelte Struktur entspricht der Formel: M^{Acr}_{3,03}D_{55,09}T₂ mit R¹ = Propylen (-CH(CH₃)CH₂- /-CH₂CH(CH₃)-) und R²= H. Die mittels Gaschromatographie ermittelten zyklische Siloxangehalte betragen <0,02% D4, <0,02% D5 und <0,26% D6. Der aus Restgehalten Trichloressigsäure resultierende Gesamtchlorgehalt des Produkts liegt bei 391 ppm.

### Vergleichsbeispiel 1 (V1) (nicht erfindungsgemäß)

Herstellung eines SiC-gebundenen α,ω-Silikonacrylats der Kettenlänge N = 28,6 (entspricht Vergleichsbeispiel 1 aus WO 2017/080747 A1):
In einem beheizbaren 500-ml-Vierhalskolben versehen mit KPG-Rührer, Innenthermometer und einem Gaseinleitungsrohr werden 227,7 g eines linearen Epoxysiloxans, das in α,ω-Position SiCgebundene epoxyfunktionelle Reste trägt und eine mittlere Kettenlänge N = 28 aufweist, gemeinsam mit 0,02 g Methylhydrochinon, 0,02 g para-Methoxyphenol, 0,49 g wässriger Cr(III)acetat-Lösung (50 gewichtsprozentig) sowie 15,2 g Acrylsäure und 0,8 g Essigsäure unter Rühren vorgelegt. Anschließend wird der Reaktionsansatz unter Einleitung eines mäßigen Luftstroms auf 120°C erwärmt. Reaktionsbegleitend werden Proben gezogen und der erreichte Umsatz an Hand der jeweiligen Säurezahl bestimmt. Nach 18 Stunden Reaktionszeit wird der Ansatz bei einem Umsatz von 93% abgebrochen. Man lässt auf 25°C erkalten, filtriert anschließend und unterwirft das Filtrat zur Abtrennung von Flüchtigen einer Destillation bei 120°C. Die ¹H- und ²⁹Si-NMR-Spektren des Destillationsrückstandes belegen einen Umsatz von 91% der eingesetzten Epoxygruppen zu den entsprechenden Carbonsäureestern. Die Viskosität des erhaltenen Produkts beträgt 1026 mPas.

### Anwendungstechnische Prüfung

### Herstellung der Trennbeschichtungen:

Die anwendungstechnische Prüfung sowohl der in den erfindungsgemäßen Synthesebeispielen S1 bis S3 hergestellten SiOC-basierten Silikonacrylate als auch des im Vergleichsbeispiel V1 hergestellten, SiC-verknüpften Silikonacrylats erfolgt in Formulierungen für Trennbeschichtungen. Trennbeschichtungen sind aus dem Stand der Technik bekannt, insbesondere als abhäsive Beschichtungen auf flächigen Trägern und dabei speziell für ihre Anwendung in Klebebändern oder Etikettenlaminaten.

Zur Herstellung der Formulierungen für Trennbeschichtungen werden je 98 g der Silikonacrylate aus den Synthesebeispielen S1 bis S5 als auch des Vergleichsbeispiels V1 mit je 2 g Photoinitiator TEGO^{®} A18 (Evonik Industries AG) intensiv vermischt.

Zusätzlich werden Trennbeschichtungsformulierungen hergestellt, bei denen jeweils 30 g TEGO^{®} RC 711 (Evonik Industries AG) mit je 68 g der Silikonacrylate aus den Synthesebeispielen S1 bis S5 und aus dem Vergleichsbeispiel V1 mit je 2 g des Photoinitiators TEGO^{®} A18 intensiv vermengt wurden (Beispiele S1a bis S5a). TEGO^{®} RC 711 ist ein acrylatfunktionelles Organosiloxan, das gemäß den Angaben aus dem dazugehörigen technischen Datenblatt für eine gute Verankerung der Beschichtungsmasse auf dem Substrat sorgt.

Zusätzlich werden Trennbeschichtungsformulierungen hergestellt, bei denen jeweils 30 g der Komponenten S1 und S3 mit jeweils 68 g der Komponente S2, S4, S5 und 2 g des Photoinitiators TEGO^{®} A18 (Evonik Industries AG) vermischt werden (Beispiele S2/1, S2/3, S4/1, S4/3, S5/1 und S5/3).

Die so hergestellten Beschichtungsmassen werden auf einen flächigen Träger aufgebracht. Dieser besteht bei allen anwendungstechnischen Beispielen aus einer 50 cm breiten, biaxial verstreckten Polypropylenfolie (BOPP), die jeweils vor Auftrag der Beschichtungsmasse mit einer Generatorleistung von 1 kW einer Coronavorbehandlung unterzogen wurde. Die Beschichtungsmassen werden mittels eines 5-Walzenbeschichtungswerkes der Firma COATEMA^{®} (Coating Machinery GmbH, Dormagen, Deutschland) mit einem Flächengewicht von ca. 1 g/m² aufgetragen und durch Einwirkung von UV-Licht einer Mitteldruckquecksilberdampflampe der Firma IST^{®} Metz GmbH (Nürtingen Deutschland), mit 60 W/cm bei einer Bahngeschwindigkeit von 100 m/min unter Stickstoffatmosphäre mit einem Restsauerstoffgehalt kleiner 50 ppm gehärtet.

Die so beschichteten Proben werden einer Prüfung hinsichtlich Rub-off, Trennwert und Restklebkraft unterzogen.

### Rub-off:

Die Überprüfung der Haftung der gehärteten Beschichtung zum Trägermaterial erfolgt durch kräftiges Reiben mit dem Daumen auf der Beschichtung. Bei mangelnder Haftung bildet sich Abrieb in Form gummiartig anmutender Krümel. Solche Krümel sollen auch bei intensivem Reiben nicht entstehen. Die Prüfung wird von einem ausgebildeten Panel durchgeführt. Die Auswertung wird kategorisiert in Bereichen von 1 bis 5, wobei 1 für eine sehr guten und 5 für eine eher schlechte Haftung zum Trägermaterial steht.

### Trennwert:

Die Trennwirkung gegen klebende Substanzen, in der technischen Anwendung zumeist in Gestalt von Klebebändern oder Etiketten, wird durch den Trennwert (TW) ausgedrückt, wobei ein niedriger Trennwert eine gute Trennwirkung beschreibt. Der Trennwert hängt von der Qualität der Trennbeschichtung, vom Klebstoff selbst und von den Testbedingungen ab. Zur Bewertung von Trennbeschichtungen sollen deshalb gleiche Klebstoffe und Testbedingungen vorliegen. Für die Ermittlung der Trennwerte werden Klebebänder oder Etikettenlaminate auf 2,5 cm Breite geschnitten und dann wird deren Klebeseite jeweils auf der zu testenden Silikonbeschichtung aufgebracht. Diese Prüfung wird gemäß FINAT Handbook 8th Edition, The Hague/NL, 2009 unter der Bezeichnung FTM 10 durchgeführt, mit der Änderung, dass die Lagerung unter Druck bei 40 °C erfolgt. Verwendet wird das Klebeband tesa^{®}7475 (Warenzeichen der Firma Tesa SE, Deutschland, Hamburg). Die angegebenen Werte sind jeweils Mittelwerte einer Fünffachbestimmung und werden in der Einheit [cN / 2,5 cm] angegeben. Systeme mit einem Trennwert unter 10 cN/ 2,5 cm gelten als leicht ablösbar (easy release) und sind üblicherweise geeignet für viele Anwendungen wie z.B. Etikettenlaminate.

### Restklebkraft:

Die Restklebkraft (Kurzzeitrestklebkraft: KUR) wird gemäß der Testvorschrift aus FINAT Handbook 8th Edition, The Hague/NL, 2009 unter der Bezeichnung FTM 11 durchgeführt, mit dem Unterschied, dass die Lagerung des Testklebestreifens im Silikonkontakt für eine Minute durchgeführt wird und die Standardoberfläche eine unbehandelte BOPP Oberfläche ist. Verwendet wird das Klebeband tesa^{®} 7475 (Warenzeichen der Firma Tesa SE, Deutschland, Hamburg). Die Restklebkraft ist ein Maß für die Vernetzung der Silikone. Sind nicht polymerisierte und deshalb migrierfähige Silikonbestandteile vorhanden, werden mit steigendem Anteil solcher Komponenten zunehmend niedrigere Restklebkraftwerte erreicht. Werte über 80% gelten als vertretbar. Die Ergebnisse des Rub-off Tests, der Trennwerte sowie der Kurzzeitrestklebkräfte (KUR) sind in Tabelle 1 dargestellt.

**Tabelle 1: Ergebnisse der anwendungstechnischen Prüfung (Rub-off in Noten von 1 bis 5; Trennwerte (TW) in cN/2,5 cm nach 24 Stunden 40°C Lagerung; Restklebkraft (KUR) in %). S1, S2 und die zugehörigen Beispiele sind Referenzbeispiele.**

| Beispiel | Rub-off | TW (TESA^{®} 7475) [cN/ 2,5 cm] | KUR [%] |
|---|---|---|---|
| V1 | 5 | 8 | 89 |
| S1 | 2 | 26 | 91 |
| S2 | 5 | 8 | 89 |
| S3 | 2 | 25 | 98 |
| S4 | 5 | 10 | 92 |
| S5 | 5 | 7 | 89 |
| V1a | 2 | 8 | 90 |
| S1a | 1 | 31 | 90 |
| S2a | 2 | 9 | 88 |
| S3a | 1 | 33 | 97 |
| S4a | 1 | 11 | 93 |
| S5a | 1 | 8 | 91 |
| S2/1 | 2 | 9 | 89 |
| S2/3 | 2 | 10 | 87 |
| S4/1 | 1 | 9 | 88 |
| S4/3 | 2 | 10 | 91 |
| S5/1 | 2 | 8 | 87 |
| S5/3 | 2 | 7 | 92 |

Aus Tabelle 1 wird ersichtlich, dass die Beispiele S2, S4 und S5 genauso niedrige Trennwerte ermöglichen, wie das Vergleichsbeispiel V1. Ein Nachteil der auf S2, S4, S5 und V1 basierenden Beschichtungen ist jedoch ihre geringe Haftung zum Untergrund (Rub-Off). Dies lässt sich durch den Zusatz einer üblichen Haftungskomponente, hier TEGO^{®} RC 711, allerdings deutlich verbessert, ohne dass die anderen Eigenschaften (TW und KUR) negativ beeinflusst werden (Beispielbeschichtungen S2a, S4a, S5a und V1a).

Die beiden Beispiele S1 und S3 führen auch ohne zusätzliche Haftungskomponente bereits zu einer guten Haftung. Die Trennwerte sind für Anwendungen, in denen es speziell auf ein leichtes Trennverhalten ankommt, etwas zu hoch. Allerdings gibt es Spezialanwendungen, bei denen auch dieses Trennverhalten geschätzt wird. Darüber hinaus können S1 und S2 als Ersatz für TEGO^{®} RC 711 in seiner Funktion als Haftungskomponente dienen, wie aus den Beispielen S2/1, S2/3, S4/1, S4/3, S5/1 und S5/3 ersichtlich ist.

Alle erfindungsgemäßen Beispiele zeigen eine gute Aushärtung, wie es an den Kurzzeitrestklebkräften (KUR) ersichtlich ist. Die erfindungsgemäß hergestellten Komponenten erfüllen somit alle wichtigen Erfordernisse für die Verwendung in Trennbeschichtungen. Sie können - an das jeweilige System adaptiert - sowohl als Haftungskomponenten oder auch als Komponenten mit niedrigem Trennwert eingesetzt werden.

## Patentansprüche

1. Verfahren zur Herstellung von Silikon(meth)acrylaten, **dadurch gekennzeichnet, dass** mindestens ein Acetoxysilikon mit mindestens einem hydroxyfunktionellen (Meth)acrylsäureester umgesetzt wird.

2. Verfahren nach Anspruch 1, **dadurch gekennzeichnet, dass** das mindestens eine Acetoxysilikon eine Verbindung der Formel (I) ist,
Mₘ₁M^{AcO}ₘ₂D_{d1}D^{AcO}_{d2}TₜQ_{q} Formel (I),
mit
M = [R₃SiO_{1/2}];
M^{AcO} = [R₂(AcO)SiO₁₂];
D = [R₂SiO_{2/2}];
D^{AcO} = [R(AcO)SiO_{2/2}];
T = [RSiO_{3/2}];
Q = [SiO_{4/2}];
m1 = 0 bis 32, vorzugsweise 0 bis 22, insbesondere 0;
m2 = 0 bis 32, vorzugsweise 1 bis 10, insbesondere 2;
d1 = 1 bis 1000, vorzugsweise 5 bis 500, insbesondere 10 bis 400;
d2 = 0 bis 10, vorzugsweise 0 bis 5, insbesondere 0;
t = 0 bis 10, vorzugsweise 0 bis 5, insbesondere 1 bis 5;
q = 0 bis 10, vorzugsweise 0 bis 5, insbesondere 1 bis 5;
worin
R jeweils unabhängig voneinander ausgewählt ist aus der Gruppe bestehend aus einbindigen organischen Resten,
vorzugsweise jeweils unabhängig voneinander ausgewählt ist aus der Gruppe bestehend aus einbindigen Kohlenwasserstoffresten mit 1 bis 30 Kohlenstoffatomen,
insbesondere Methyl ist;
AcO für eine Acetoxygruppe steht;
mit der Maßgabe, dass gilt:
m1+m2 = mindestens 2, vorzugsweise 2 bis 20, insbesondere 3 bis 10;
m2+d2 = mindestens 1, vorzugsweise 2 bis 10, insbesondere 2 bis 6.

3. Verfahren nach mindestens einem der Ansprüche 1 bis 2, **dadurch gekennzeichnet, dass** das mindestens eine Acetoxysilikon durch Umsetzung von
a) Alkoxygruppen tragenden Silanen und/oder Siloxanen, und/oder
b) Acetoxygruppen tragenden Silanen und/oder Siloxanen, und/oder
c) Hydroxygruppen tragenden Silanen und/oder Siloxanen, und/oder
d) einfachen Siloxancyclen und/oder DT-Cyclen,
mit Essigsäureanhydrid, sowie vorzugsweise Essigsäure, und mindestens einer Brönstedtsäure mit einem pKa von ≤ -1,3, bevorzugt einer Supersäure mit einem pKa von kleiner -3,0, weiter bevorzugt Perfluoralkansulfonsäure, besonders bevorzugt Trifluormethansulfonsaure als Katalysator hergestellt werden.

4. Verfahren nach mindestens einem der Ansprüche 1 bis 3, **dadurch gekennzeichnet, dass** das mindestens eine brönstedtsaure, bevorzugt supersaure, weiter bevorzugt perfluoralkansulfonsaure, besonders bevorzugt trifluormethansulfonsaure Acetoxysilikon vor der weiteren Umsetzung mit der mindestens einen hydroxyfunktionellen (Meth)acrylsäure mit einer Base neutralisiert wird.

5. Verfahren nach mindestens einem der Ansprüche 1 bis 4, **dadurch gekennzeichnet, dass** der mindestens eine hydroxyfunktionelle (Meth)acrylsäureester eine Verbindung der Formel (II) ist, 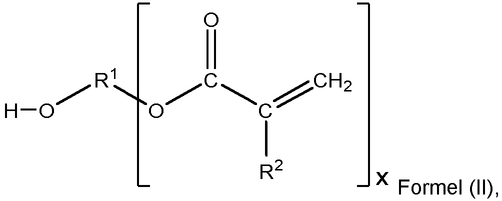 mit
x = mindestens 1, vorzugsweise 1 bis 3, insbesondere 1;
worin
R¹ jeweils unabhängig voneinander ausgewählt ist aus der Gruppe bestehend aus (x+1)-bindigen organischen Resten,
vorzugsweise jeweils unabhängig voneinander ausgewählt ist aus der Gruppe bestehend aus Kohlenwasserstoffresten mit 1 bis 40 Kohlenstoffatomen, die von Sauerstoff- und/oder Stickstoffatomen und/oder NH-Gruppen unterbrochen sein können,
insbesondere jeweils unabhängig voneinander ausgewählt ist aus der Gruppe bestehend aus zweiwertigen Alkylen- und Polyoxyalkylen-Resten;
R² jeweils unabhängig voneinander ein Wasserstoffrest oder ein Methylrest ist.

6. Verfahren zur Herstellung von Silikon(meth)acrylaten nach mindestens einem der Ansprüche 1 bis 5, **dadurch gekennzeichnet, dass** das molare Verhältnis der Hydroxylgruppen des mindestens einen hydroxyfunktionellen (Meth)acrylsäureesters zu den Acetoxygruppen des mindestens einen Acetoxysilikons mindestens 1,00, vorzugsweise 1,03 bis 1,15, insbesondere 1,05 bis 1,10 beträgt.

7. Verfahren nach mindestens einem der Ansprüche 1 bis 6, **dadurch gekennzeichnet, dass** das mindestens eine Acetoxysilikon mit dem mindestens einen hydroxyfunktionellen (Meth)acrylsäureester in Gegenwart eines Katalysators ausgewählt aus der Gruppe bestehend aus
a) Brönstedtsäuren mit einem pKa-Wert von < -3, vorzugsweise Sulfonsäuren oder Halogencarbonsäuren, insbesondere ausgewählt aus der Gruppe bestehend aus Trifluormethansulfonsäure, Methansulfonsäure, para-Toluolsulfonsäure und Trifluoressigsäure;
und/oder
b) Lewis-Säuren;
und/oder
c) Metallkatalysatoren, vorzugweise ausgewählt aus der Gruppe bestehend aus Alkyltitanaten, Metallcarboxylaten und Metall-Acetylacetonatokomplexen, insbesondere ausgewählt aus der Gruppe bestehend aus Titantetrabutanolat, Zinkacetylacetonat und Zinkcarboxylat;
umgesetzt wird.

8. Verfahren nach mindestens einem der Ansprüche 1 bis 7, **dadurch gekennzeichnet, dass** die Umsetzung des mindestens einen Acetoxysilikons mit dem mindestens einen hydroxyfunktionellen (Meth)acrylsäureester bei einer Temperatur von 40°C bis 150°C, besonders bevorzugt von 70°C bis 120°C, über einen Zeitraum von einer bis 8 Stunden, bevorzugt über einen Zeitraum von 3 bis 6 Stunden, durchgeführt wird.

9. Verfahren nach mindestens einem der Ansprüche 1 bis 8, **dadurch gekennzeichnet, dass** das Umsetzungsprodukt 1 bis 8 Stunden, bevorzugt 1 bis 4 Stunden, bei einer Temperatur von 80°C bis 140°C, bevorzugt von 100°C bis 130°C unter Anlegen eines Hilfsvakuums von weniger als 200 mbar, bevorzugt von weniger als 20 mbar, insbesondere von weniger als 4 mbar von flüchtigen Bestandteilen befreit wird.

10. Verfahren nach mindestens einem der Ansprüche 1 bis 9, **dadurch gekennzeichnet, dass** die im Umsetzungsprodukt gegebenenfalls enthaltenen Säuren bei einer Temperatur von 20°C bis 110°C, bevorzugt von 40°C bis 80°C, durch Hinzufügen einer festen, flüssigen oder gasförmigen Base neutralisiert werden, wobei die Verwendung einer festen Base insbesondere in Form von Carbonaten und/oder Hydrogencarbonaten der Alkali- und/oder der Erdalkalielemente und/oder des Ammoniums oder die Verwendung von flüssigen Basen, hierbei bevorzugt von aliphatischen und/oder aromatischen und/oder alkylaromatischen Aminen oder die Verwendung von Ammoniak als gasförmiger Base bevorzugt sind.

11. Silikon(meth)acrylat, bevorzugt herstellbar nach einem Verfahren nach mindestens einem der Ansprüche 1 bis 10, der Formel (III),
Mₘ₁M^{Acr}ₘ₂D_{d1}D^{Acr}_{d2}TₜQ_{q} Formel (III),
mit
M = [R₃SiO_{1/2}];
M^{Acr} = [RR^{Acr}SiO_{1/2}];
D = [R₂SiO_{2/2}];
D^{Acr} = [RR^{Acr}SiO_{2/2}];
T = [RSiO_{3/2}];
Q = [SiO_{4/2}];
m1 = 0 bis 32, vorzugsweise 0 bis 22, insbesondere 0;
m2 = 0 bis 32, vorzugsweise 1 bis 10, insbesondere 2;
d1 = 1 bis 1000, vorzugsweise 5 bis 500, insbesondere 10 bis 400;
d2 = 0;
t = 1 bis 5;
q = 0 bis 10, vorzugsweise 0 bis 5, insbesondere 1 bis 5;
mit der Maßgabe, dass gilt:
m1+m2 = mindestens 2, vorzugsweise 2 bis 20, insbesondere 3 bis 10;
m2+d2 = mindestens 1, vorzugsweise 2 bis 10, insbesondere 2 bis 6;
worin
R jeweils unabhängig voneinander ausgewählt ist aus der Gruppe bestehend aus einbindigen Kohlenwasserstoffresten mit 1 bis 30 Kohlenstoffatomen, insbesondere Methyl ist;
R^{Acr} jeweils unabhängig voneinander ausgewählt ist aus einbindigen Resten der Formel (IV), 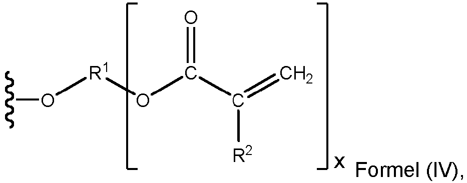
mit
x = mindestens 1, vorzugsweise 1 bis 3, insbesondere 1;
worin
R¹ jeweils unabhängig voneinander ausgewählt ist aus der Gruppe bestehend aus (x+1)-bindigen organischen Resten, vorzugsweise jeweils unabhängig voneinander ausgewählt ist aus der Gruppe bestehend aus Kohlenwasserstoffresten mit 1 bis 40 Kohlenstoffatomen, die von Sauerstoff- und/oder Stickstoffatomen und/oder NH-Gruppen unterbrochen sein können, insbesondere jeweils unabhängig voneinander ausgewählt ist aus der Gruppe bestehend aus zweiwertigen Alkylen- und Polyoxyalkylen-Resten;
R² jeweils unabhängig voneinander ein Wasserstoffrest oder ein Methylrest ist.

12. Produkt, herstellbar nach einem Verfahren nach mindestens einem der Ansprüche 1 bis 10, enthaltend mindestens ein Silikon(meth)acrylat nach Anspruch 11.

13. Produkt nach Anspruch 12, **dadurch gekennzeichnet, dass** der Massenanteil an Schwermetallen, Bor und/oder Chlor bezogen auf die Gesamtmasse des Produkts bzw. Silikon(meth)acrylats jeweils ≤ 0,5 %, insbesondere ≤ 0,1 % beträgt.

14. Produkt nach mindestens einem der Ansprüche 12 bis 13, **dadurch gekennzeichnet, dass** die Summe der D₄-, D₅- und D₆-Massenanteile bezogen auf die Masse des Produkts bzw. Silikon(meth)acrylats ≤ 0,1 %, insbesondere ≤ 0,05 % beträgt.

15. Zusammensetzung enthaltend mindestens ein Produkt nach mindestens einem der Ansprüche 12 bis 14 oder mindestens ein Silikon(meth)acrylat nach Anspruch 11.

16. Zusammensetzung nach Anspruch 15, **dadurch gekennzeichnet, dass** sie härtbar, vorzugsweise mittels Radikalreaktion härtbar ist, wobei die Radikalreaktion thermisch oder durch UV-Strahlen oder Elektronenstrahlen initiiert werden kann.

17. Trennbeschichtung oder 3D-Druck erhältlich durch Aushärtung einer Zusammensetzung nach Anspruch 16.

## Claims

1. Method for preparing silicone (meth)acrylates, **characterized in that** at least one acetoxy silicone is reacted with at least one hydroxy-functional (meth)acrylic ester.

2. Method according to Claim 1, **characterized in that** the at least one acetoxy silicone is a compound of formula (I),
Mₘ₁M^{AcO}ₘ₂D_{d1}D^{AcO}_{d2}TₜQ_{q} formula (I),
where
M = [R₃SiO_{1/2}];
M^{AcO} = [R₂(AcO)SiO_{1/2}];
D = [R₂SiO_{2/2}];
D^{AcO} = [R(AcO)SiO_{2/2}];
T = [RSiO_{3/2}];
Q = [SiO_{4/2}];
m1 = 0 to 32, preferably 0 to 22, in particular 0;
m2 = 0 to 32, preferably 1 to 10, in particular 2;
d1 = 1 to 1000, preferably 5 to 500, in particular 10 to 400;
d2 = 0 to 10, preferably 0 to 5, in particular 0;
t = 0 to 10, preferably 0 to 5, in particular 1 to 5;
q = 0 to 10, preferably 0 to 5, in particular 1 to 5;
in which
R is in each case independently selected from the group consisting of monovalent organic radicals,
is preferably in each case independently selected from the group consisting of monovalent hydrocarbon radicals having 1 to 30 carbon atoms,
is in particular methyl;
AcO is an acetoxy group;
with the proviso that:
m1+m2 = at least 2, preferably 2 to 20, in particular 3 to 10;
m2+d2 = at least 1, preferably 2 to 10, in particular 2 to 6.

3. Method according to at least one of Claims 1 to 2, **characterized in that** the at least one acetoxy silicone is prepared by reacting
a) silanes and/or siloxanes bearing alkoxy groups, and/or
b) silanes and/or siloxanes bearing acetoxy groups, and/or
c) silanes and/or siloxanes bearing hydroxy groups, and/or
d) simple siloxane cycles and/or DT cycles,
with acetic anhydride, and preferably acetic acid, and as catalyst at least one Brønsted acid having a pKa of ≤ -1.3, preferably a superacid having a pKa of less than -3.0, further preferably perfluoroalkanesulfonic acid, particularly preferably trifluoromethanesulfonic acid.

4. Method according to at least one of Claims 1 to 3, **characterized in that** the at least one Brønsted acid-, preferably superacid-, further preferably perfluoroalkanesulfonic acid-, particularly preferably trifluoromethanesulfonic acid-acidified acetoxy silicone is neutralized with a base prior to the further reaction with the at least one hydroxy-functional (meth)acrylic acid.

5. Method according to at least one of Claims 1 to 4, **characterized in that** the at least one hydroxy-functional (meth)acrylic ester is a compound of formula (II), 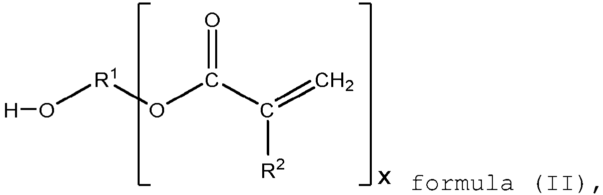 where
x = at least 1, preferably 1 to 3, in particular 1;
in which
R¹ is in each case independently selected from the group consisting of (x+1)-valent organic radicals,
is preferably in each case independently selected from the group consisting of hydrocarbon radicals having 1 to 40 carbon atoms, which may be interrupted by oxygen and/or nitrogen atoms and/or NH groups,
is in particular in each case independently selected from the group consisting of divalent alkylene and polyoxyalkylene radicals;
R² is in each case independently a hydrogen radical or a methyl radical.

6. Method for preparing silicone (meth)acrylates according to at least one of Claims 1 to 5, **characterized in that** the molar ratio of the hydroxy groups of the at least one hydroxy-functional (meth)acrylic ester to the acetoxy groups of the at least one acetoxy silicone is at least 1.00, preferably 1.03 to 1.15, in particular 1.05 to 1.10.

7. Method according to at least one of Claims 1 to 6, **characterized in that** the at least one acetoxy silicone is reacted with the at least one hydroxy-functional (meth)acrylic ester in the presence of a catalyst selected from the group consisting of
a) Bronsted acids having a pKa of < -3, preferably sulfonic acids or halocarboxylic acids, in particular selected from the group consisting of trifluoromethanesulfonic acid, methanesulfonic acid, para-toluenesulfonic acid and trifluoroacetic acid;
and/or
b) Lewis acids;
and/or
c) metal catalysts, preferably selected from the group consisting of alkyl titanates, metal carboxylates and metal acetylacetonato complexes, in particular selected from the group consisting of titanium tetrabutoxide, zinc acetylacetonate and zinc carboxylate.

8. Method according to at least one of Claims 1 to 7, **characterized in that** the reaction of the at least one acetoxy silicone with the at least one hydroxy-functional (meth)acrylic ester is carried out at a temperature of 40°C to 150°C, particularly preferably of 70°C to 120°C, over a period of 1 to 8 hours, preferably over a period of 3 to 6 hours.

9. Method according to at least one of Claims 1 to 8, **characterized in that** the reaction product is freed of volatile constituents for 1 to 8 hours, preferably 1 to 4 hours, at a temperature of 80°C to 140°C, preferably of 100°C to 130°C, with application of an auxiliary vacuum of less than 200 mbar, preferably of less than 20 mbar, in particular of less than 4 mbar.

10. Method according to at least one of Claims 1 to 9, **characterized in that** any acids present in the reaction product are neutralized at a temperature of 20°C to 110°C, preferably 40°C to 80°C, by adding a solid, liquid or gaseous base, where preference is given to the use of a solid base in particular in the form of carbonates and/or hydrogencarbonates of the alkali metal and/or alkaline earth metal elements and/or of ammonium or the use of liquid bases, in this case preferably of aliphatic and/or aromatic and/or alkylaromatic amines, or the use of ammonia as gaseous base.

11. Silicone (meth)acrylate, preferably preparable by a method according to at least one of Claims 1 to 10, of formula (III),
Mₘ₁M^{Acr}ₘ₂D_{d1}D^{Acr}_{d2}TₜQ_{q} formula (III),
where
M = [R₃SiO_{1/2}];
M^{Acr} = [RR^{Acr}SiO_{1/2}];
D = [R₂SiO_{2/2}];
D^{Acr} = [RR^{Acr}SiO_{2/2}];
T = [RSiO_{3/2}];
Q = [SiO_{4/2}];
m1 = 0 to 32, preferably 0 to 22, in particular 0;
m2 = 0 to 32, preferably 1 to 10, in particular 2;
d1 = 1 to 1000, preferably 5 to 500, in particular 10 to 400;
d2 = 0;
t = 1 to 5;
q = 0 to 10, preferably 0 to 5, in particular 1 to 5; with the proviso that:
m1+m2 = at least 2, preferably 2 to 20, in particular 3 to 10;
m2+d2 = at least 1, preferably 2 to 10, in particular 2 to 6;
in which
R is in each case independently selected from the group consisting of monovalent hydrocarbon radicals having 1 to 30 carbon atoms,
is in particular methyl;
R^{Acr} is in each case independently selected from
monovalent radicals of formula (IV), 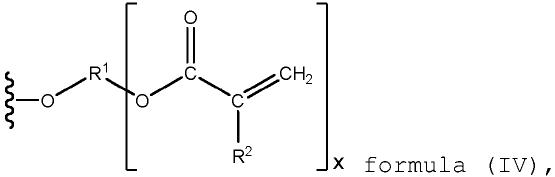
where
x = at least 1, preferably 1 to 3, in particular 1;
in which
R¹ is in each case independently selected from the group consisting of (x+1)-valent organic radicals,
is preferably in each case independently selected from the group consisting of hydrocarbon radicals having 1 to 40 carbon atoms, which may be interrupted by oxygen and/or nitrogen atoms and/or NH groups,
is in particular in each case independently selected from the group consisting of divalent alkylene and polyoxyalkylene radicals;
R² is in each case independently a hydrogen radical or a methyl radical.

12. Product, preparable by a method according to at least one of Claims 1 to 10, comprising at least one silicone (meth)acrylate according to Claim 11.

13. Product according to Claim 12, **characterized in that** the proportion by mass of heavy metals, boron and/or chlorine based on the total mass of the product or silicone (meth)acrylate is in each case ≤ 0.5%, in particular ≤ 0.1%.

14. Product according to at least one of Claims 12 to 13, **characterized in that** the sum total of the proportions by mass of D₄, D₅ and D₆ based on the mass of the product or silicone (meth)acrylate is ≤ 0.1%, in particular ≤ 0.05%.

15. Composition comprising at least one product according to at least one of Claims 12 to 14 or at least one silicone (meth)acrylate according to Claim 11.

16. Composition according to Claim 15, **characterized in that** said composition is curable, preferably curable by means of a radical reaction, where the radical reaction can be initiated thermally or by UV radiation or electron beams.

17. Release coating or 3D printing obtainable by curing a composition according to Claim 16.

## Revendications

1. Procédé de préparation de (méth)acrylates de silicone, **caractérisé en ce qu'**au moins une acétoxysilicone est mise en réaction avec au moins un ester d'acide (méth)acrylique à fonction hydroxy.

2. Procédé selon la revendication 1, **caractérisé en ce que** l'au moins une acétoxysilicone est un composé de formule (I),
Mₘ₁M^{Aco}ₘ₂D_{d1}D^{AcO}_{d2}TₜQ_{q} Formule (I),
où
M = [R₃SiO_{1/2}] ;
M^{AcO} = [R₂(AcO)SiO_{1/2}];
D = [R₂SiO_{2/2}];
D^{AcO} = [R(AcO)SiO_{2/2}];
T = [RSiO_{3/2}] ;
Q = [SiO_{4/2}] ;
m1 = 0 à 32, préférablement 0 à 22, en particulier 0 ;
m2 = 0 à 32, préférablement 1 à 10, en particulier 2 ;
d1 = 1 à 1000, préférablement 5 à 500, en particulier 10 à 400 ;
d2 = 0 à 10, préférablement 0 à 5, en particulier 0 ;
t = 0 à 10, préférablement 0 à 5, en particulier 1 à 5 ;
q = 0 à 10, préférablement 0 à 5, en particulier 1 à 5 ; où
R est choisi indépendamment dans le groupe constitué par les radicaux organiques monovalents,
de préférence est choisi indépendamment dans le groupe constitué par les radicaux hydrocarbonés monovalents de 1 à 30 atomes de carbone,
en particulier méthyle ;
AcO représente un groupe acétoxy ;
étant entendu qu'il s'appplique que :
m1+m2 = au moins 2, préférablement 2 à 20, en particulier 3 à 10 ;
m2+d2 = au moins 1, préférablement 2 à 10, en particulier 2 à 6.

3. Procédé selon au moins l'une des revendications 1 à 2, **caractérisé en ce que** l'au moins une acétoxysilicone est obtenue par mise en réaction de
a) des silanes et/ou des siloxanes portant des groupes alcoxy et/ou
b) des silanes et/ou des siloxanes portant des groupes acétoxy et/ou
c) des silanes et/ou des siloxanes portant des groupes hydroxy et/ou
d) des cycles siloxanes simples et/ou des cycles DT,
avec de l'anhydride acétique, ainsi que préférablement de l'acide acétique, et au moins un acide de Brönsted ayant un pKa ≤ -1,3, de préférence un superacide ayant un pKa inférieur à -3,0, de préférence encore l'acide perfluoroalcanesulfonique, de manière particulièrement préférée l'acide trifluorométhanesulfonique, en tant que catalyseur.

4. Procédé selon au moins l'une des revendications 1 à 3, **caractérisé en ce que** l'acide de Brönsted, de préférence le superacide, de préférence encore l'acide perfluoroalcanesulfonique, de manière particulièrement préférée l'acide trifluorométhanesulfonique acétoxysilicone est neutralisé avec une base avant la mise en réaction supplémentaire avec l'au moins un acide (méth)acrylique à fonction hydroxy.

5. Procédé selon au moins l'une des revendications 1 à 4, **caractérisé en ce que** l'au moins un ester d'acide (méth)acrylique à fonction hydroxy est un composé de formule (II) 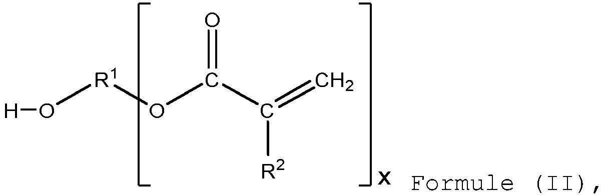 avec
x = au moins 1, préférablement 1 à 3, en particulier 1 ; où
R¹ est choisi indépendamment dans le groupe constitué par les radicaux organiques à (x+1)-valents,
de préférence est choisi indépendamment dans le groupe constitué par les radicaux hydrocarbonés de 1 à 40 atomes de carbone, qui peuvent être interrompus par des atomes d'oxygène et/ou d'azote et/ou des groupes NH,
est en particulier choisi indépendamment dans le groupe constitué par les radicaux alkylène et polyoxyalkylène divalents ;
R² est indépendamment un radical d'hydrogène ou un radical méthyle.

6. Procédé de préparation de (méth)acrylates de silicone selon au moins l'une des revendications 1 à 5, **caractérisé en ce que** le rapport molaire entre les groupes hydroxyle de l'au moins un ester d'acide (méth)acrylique à fonction hydroxy et les groupes acétoxy de l'au moins une acétoxysilicone est d'au moins 1,00, préférablement de 1,03 à 1,15, en particulier de 1,05 à 1,10.

7. Procédé selon au moins l'une des revendications 1 à 6, **caractérisé en ce que** l'au moins une acétoxysilicone est mise en réaction avec l'au moins un ester d'acide (méth)acrylique à fonction hydroxy en présence d'un catalyseur choisi dans le groupe constitué par
a) les acides de Brönsted ayant une valeur de pKa < -3, préférablement les acides sulfoniques ou les acides halogénocarboxyliques, en particulier choisis dans le groupe constitué par l'acide trifluorométhanesulfonique, l'acide méthanesulfonique, l'acide para-toluènesulfonique et l'acide trifluoroacétique ;
et/ou
b) les acides de Lewis ;
et/ou
c) les catalyseurs métalliques, choisis de préférence dans le groupe constitué par les titanates d'alkyle, les carboxylates métalliques et les complexes métalliques d'acétylacétonate, en particulier choisis dans le groupe constitué par le tétrabutanolate de titane, l'acétylacétonate de zinc et le carboxylate de zinc.

8. Procédé selon au moins l'une des revendications 1 à 7, **caractérisé en ce que** la réaction de l'au moins une acétoxysilicone avec l'au moins un ester d'acide (méth)acrylique à fonction hydroxy est réalisée à une température de 40 °C à 150 °C, de manière particulièrement préférée de 70 °C à 120 °C, pendant une durée de une à 8 heures, de préférence de 3 à 6 heures.

9. Procédé selon au moins une des revendications 1 à 8, **caractérisé en ce que** le produit de réaction est débarrassé des composants volatils pendant 1 à 8 heures, préférablement 1 à 4 heures, à une température de 80 °C à 140 °C, préférablement de 100 °C à 130 °C, en appliquant un vide auxiliaire inférieur à 200 mbar, de préférence inférieur à 20 mbar, et en particulier inférieur à 4 mbar.

10. Procédé selon au moins l'une des revendications 1 à 9, **caractérisé en ce que** les acides éventuellement contenus dans le produit de réaction sont neutralisés à une température de 20 °C à 110 °C, de préférence de 40 °C à 80 °C, par ajout d'une base solide, liquide ou gazeuse, l'utilisation d'une base solide, en particulier sous forme de carbonates et/ou d'hydrogénocarbonates des éléments alcalins et/ou alcalino-terreux et/ou de l'ammonium, ou l'utilisation de bases liquides, de préférence d'amines aliphatiques et/ou aromatiques et/ou alkylaromatiques ou l'utilisation d'ammoniac comme base gazeuse étant préférées.

11. (Méth)acrylate de silicone , pouvant être fabriqué de préférence par un procédé selon au moins l'une des revendications 1 à 10, de formule (III),
Mₘ₁ M^{Acr}ₘ₂ D_{d1} D^{Acr}_{d2} Tt Q_{q} Formule (III),
où
M = [R₃SiO_{1/2}] ;
M^{Acr} = [RR^{Acr}SiO_{1/2}] ;
D = [R₂SiO_{2/2}] ;
D^{Acr} = [RR^{Acr}SiO_{2/2}] ;
T = [RSiO_{3/2}] ;
Q = [SiO_{4/2}] ;
m1 = 0 à 32, préférablement 0 à 22, en particulier 0 ;
m2 = 0 à 32, préférablement 1 à 10, en particulier 2 ;
d1 = 1 à 1000, préférablement 5 à 500, en particulier 10 à 400 ;
d2 = 0 ;
t = 1 à 5 ;
q = 0 à 10, préférablement 0 à 5, en particulier 1 à 5 ; étant entendu qu'il s'appplique que :
m1+m2 = au moins 2, préférablement 2 à 20, en particulier 3 à 10 ;
m2+d2 = au moins 1, préférablement 2 à 10, en particulier 2 à 6 ;
où
R est choisi, à chaque fois indépendamment, dans le groupe constitué par les radicaux hydrocarbonés monovalents de 1 à 30 atomes de carbone,
en particulier méthyle ;
R^{Acr} est choisi indépendamment parmi les radicaux de formule (IV), 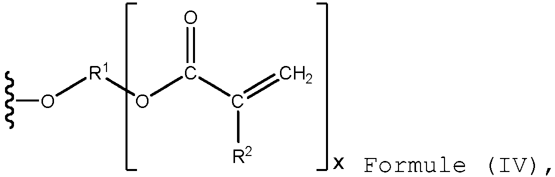
où
x = au moins 1, préférablement 1 à 3, en particulier 1 ; où
R¹ est choisi indépendamment dans le groupe constitué par les radicaux organiques à (x+1)-valents,
de préférence est choisi indépendamment dans le groupe constitué par les radicaux hydrocarbonés de 1 à 40 atomes de carbone, qui peuvent être interrompus par des atomes d'oxygène et/ou d'azote et/ou des groupes NH,
est en particulier choisi indépendamment dans le groupe constitué par les radicaux alkylène et polyoxyalkylène divalents ;
R² est indépendamment un radical d'hydrogène ou un radical méthyle.

12. Produit, pouvant être fabriqué par un procédé selon au moins l'une des revendications 1 à 10, contenant au moins un (méth)acrylate de silicone selon la revendication 11.

13. Produit selon la revendication 12, **caractérisé en ce que** la proportion massique de métaux lourds, de bore et/ou de chlore par rapport à la masse totale du produit ou dy (méth)acrylate de silicone est ≤ 0,5 %, et en particulier ≤ 0,1 %.

14. Produit selon au moins l'une des revendications 12 à 13, **caractérisé en ce que** la somme des proportions massiques D₄, D₅ et D₆ par rapport à la masse du produit ou du (méth)acrylate de silicone est ≤ 0,1 %, en particulier ≤ 0,05 %.

15. Composition contenant au moins un produit selon au moins l'une des revendications 12 à 14 ou au moins un (méth)acrylate de silicone selon la revendication 11.

16. Composition selon la revendication 15, **caractérisée en ce qu'**elle est durcissable, de préférence durcissable par réaction radicale, la réaction radicale pouvant être initiée thermiquement ou par rayons UV ou faisceaux d'électrons.

17. Revêtement de séparation ou impression 3D pouvant être obtenu(e) en durcissant une composition selon la revendication 16.
